# EUROPEAN PATENT SPECIFICATION

(11) **EP 4 256 861 B1**
(45) Date of publication and mention of the grant of the patent: **28.05.2025**
(21) Application number: 22828676.1
(22) Date of filing: 17.06.2022
(51) Int. Cl.: H04B 17/345, H04W 52/02, H04W 72/27, H04B 7/06, H04W 72/541, H04W 84/12

(54) **TWT COORDINATION FOR MULTI-AP OPERATION**
TWT-KOORDINATION FÜR MULTI-AP-BETRIEB
COORDINATION DE TEMPS DE RÉVEIL CIBLE (TWT) POUR FONCTIONNEMENT MULTI-AP

(30) Priority: 21.06.2021 US 202163212800 P; 21.06.2021 US 202163212802 P; 23.06.2021 US 202163214080 P; 10.06.2022 US 202217838096
(43) Date of publication of application: 11.10.2023
(73) Proprietor: Samsung Electronics Co., Ltd., Suwon-si, Gyeonggi-do 16677 (KR)
(72) Inventor: SHAFIN, Rubayet, Mountain View, California 94043 (US); NG, Loong Boon, Mountain View, California 94043 (US); IBRAHIM, Atef Ibrahim Ahmed, Mountain View, California 94043 (US)
(74) Representative: Appleyard Lees IP LLP
(86) International application number: PCT/KR2022/008619
(87) International publication number: WO 2022/270829

(56) References cited:
- EP-A1- 3 820 225
- WO-A1-2017/172785
- US-A1- 2018 242 373
- US-A1- 2019 261 269
- US-A1- 2021 022 154
- LIUMING LU (OPPO): "Discussion on 802.11be features to support TSN capabilities", vol. 802.11 EHT; 802.11be, 20 April 2021 (2021-04-20), pages 1 - 10, XP068179835, Retrieved from the Internet <URL:https://mentor.ieee.org/802.11/dcn/21/11-21-0681-00-00be-discussion-on-802-11be-features-to-support-tsn-capabilities.pptx> [retrieved on 20210420]
- LIUMING LU (OPPO): "Discussion on 802.11be features to support TSN capabilities", IEEE DRAFT; 11-21-0681-00-00BE-DISCUSSION-ON-802-11BE-FEATURES-TO-SUPPORT-TSN-CAPABILITIES, IEEE-SA MENTOR, PISCATAWAY, NJ USA, vol. 802.11 EHT; 802.11be, no. 0, 20 April 2021 (2021-04-20), Piscataway, NJ USA , pages 1 - 10, XP068179835

## Description

### Technical Field

This disclosure relates generally to interference management in wireless communications systems. Embodiments of this disclosure relate to methods and apparatuses for coordinating between multiple access points in a wireless local area network communications system to avoid interference in areas where the coordinating access points have overlapping coverage.

### Background Art

Wireless local area network (WLAN) technology allows devices to access the internet in the 2.4 GHz, 5GHz, 6GHz or 60 GHz frequency bands. WLANs are based on the Institute of Electrical and Electronic Engineers (IEEE) 802.11 standards. The IEEE 802.11 family of standards aim to increase speed and reliability and to extend the operating range of wireless networks.

Multi-Access Point (MAP) coordination is one of the most important features for interference management in WI-FI (wireless fidelity) networks, which was developed by IEEE 802.11ax. With MAP, multiple APs can cooperate together to enhance the performance of the network by smartly managing the co-channel interference (CCI) between one Basic Service Set (BSS) and other Overlapping Basic Service Sets (OBSSs). In IEEE 802.11ax standards, Spatial Reuse (SR), a simple coordination method, is introduced. In SR, APs coordinate their power transmission so that interference is controlled. However, in IEEE 802.11be standards, many other coordination techniques are under study considering power, frequency, and beamforming coordination. Each coordination technique requires a different level of information sharing between coordinating APs and has different data, resource allocation, and beamforming requirements.

In IEEE 802.11be standards, multiple terminologies are introduced for MAP coordination operations. A set of APs that can cooperate and coordinate their transmissions are called a coordinating set, and contains at least one coordinating AP and at least one coordinated AP. An AP that obtains a transmission opportunity (TXOP) is called the sharing AP while other APs in the coordinating set that participate in the actual transmission are called shared APs. Not every coordinated AP is a shared AP as some coordinated APs may not participate in the actual transmission. A sharing AP may be the same as the coordinating AP, or a hierarchical network may exist where a coordinating AP is different from a sharing AP and the coordinating AP is in communication with all shared and sharing APs.

MAP coordination would be essential for dense networks where multiple APs are required to provide better performance. The existence of multiple APs in dense networks causes more contention in the channel and less accessibility if coordination is not considered in addition to smart network planning.

Target Wake Time (TWT) is one of the important features of the IEEE 802.11ax amendment. TWT enables wake time negotiation between an AP and an associated station (STA) for improving power efficiency. With TWT operation, it suffices for a STA to only wake up at a pre-scheduled time negotiated with another STA or AP in the network. In IEEE 802.11ax standards, two types of TWT operation are possible - individual TWT operation and broadcast TWT operation. Individual TWT agreements can be established between two STAs or between a STA and an AP. On the other hand, with broadcast TWT operation, an AP can set up a shared TWT session for a group of STAs.

The negotiated parameters such as the wake interval, wake duration and initial wake time (offset) highly affect latency, throughput as well as power efficiency, which are directly related to QoS (quality of service) or customer experiences. Services with different traffic characteristics will have different TWT parameter configurations for better QoS. Additionally, the TWT configuration should adapt to network and service status variation.

Restricted TWT (rTWT) operation, which is based on broadcast TWT operation, is a feature introduced with a view to providing better support for latency sensitive applications. Restricted TWT offers a protected service period for its member STAs by sending Quiet elements to other STAs in the BSS which are not members of the restricted TWT schedule, where the Quiet interval corresponding to the Quiet element overlaps with the initial portion of the restricted TWT SP. Hence, it gives more channel access opportunity for the restricted TWT member scheduled STAs, which helps latency-sensitive traffic flow.

An example is known from EP3820225A1

### Disclosure of Invention

### Solution to Problem

Embodiments of the present disclosure provide methods and apparatuses for balancing a tradeoff between channel utilization and fairness during restricted TWT operation in a wireless network (e.g., a WLAN).

In one embodiment, a first AP device is provided, comprising a transceiver, a backhaul interface, and a processor operably coupled to the transceiver and backhaul interface. The transceiver is configured to transmit traffic to a first STA during a TXOP in a first TWT SP based on parameters of a first TWT operation between the first AP and the first STA, and to receive, from the first STA, an interference notification message that includes an indication that the first STA has detected interference with the traffic transmission caused by transmissions between a second STA and a second AP in the MAP coordinating set of APs. The backhaul interface is configured to transmit, to the second AP, a MAP coordination announcement that includes (i) an indication that the first AP has obtained the TXOP and (ii) the parameters of the first TWT operation, and to receive, from the second AP, a MAP coordination response that indicates capabilities of the second AP pertaining to its participation in the MAP coordination. The processor is configured to determine, based on the MAP coordination response, whether to perform MAP coordination with the second AP during the TXOP, or whether to modify the parameters of the first TWT operation based on the interference notification message.

In another embodiment, a second AP device is provided, comprising a transceiver, a backhaul interface, and a processor operably coupled to the transceiver and backhaul interface. The transceiver is configured to transmit traffic to a second station (STA) in a second target wake time (TWT) service period (SP) based on parameters of a second TWT operation between the second AP and the second STA. The backhaul interface is configured to receive, from a first AP, a MAP coordination announcement that includes (i) an indication that the first AP has obtained a TXOP and (ii) parameters of a first TWT operation between the first AP and a first STA, and to transmit, to the first AP, a MAP coordination response that indicates capabilities of the second AP pertaining to its participation in the MAP coordination. The processor is configured to determine, based on the MAP coordination announcement, the capabilities of the second AP pertaining to its participation in the MAP coordination.

In another embodiment, a method performed by the first AP is provided, including the step of receiving, from a first STA with which the first AP exchanges traffic in a first TWT SP based on parameters of a first TWT operation between the first AP and the first STA, an interference notification message that includes an indication that the first STA has detected interference with a traffic transmission from the first AP, the interference caused by transmissions between a second STA and a second AP in the MAP coordinating set of APs. The method further includes the steps of transmitting, to the second AP, a MAP coordination announcement that includes (i) an indication that the first AP has obtained a transmission opportunity (TXOP) and (ii) the parameters of the first TWT operation, receiving, from the second AP, a MAP coordination response that indicates capabilities of the second AP pertaining to its participation in the MAP coordination, and determining, based on the MAP coordination response, whether to perform MAP coordination with the second AP during the TXOP, or whether to modify the parameters of the first TWT operation based on the interference notification message.

In another embodiment, a method performed by the second AP is provided, including the step of transmitting traffic to a second station (STA) in a second target wake time (TWT) service period (SP) based on parameters of a second TWT operation between the second AP and the second STA, receiving, from a first AP, a MAP coordination announcement that includes (i) an indication that the first AP has obtained a TXOP and (ii) parameters of a first TWT operation between the first AP and a first STA, and transmitting, to the first AP, a MAP coordination response that indicates capabilities of the second AP pertaining to its participation in the MAP coordination, and determining, based on the MAP coordination announcement, the capabilities of the second AP pertaining to its participation in the MAP coordination.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C. As used herein, such terms as "1st" and "2nd," or "first" and "second" may be used to simply distinguish a corresponding component from another and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

The following documents and standards descriptions are hereby incorporated into the present disclosure as if fully set forth herein:
[1] IEEE 802.11-20/1935r30, "Compendium of straw polls and potential changes to the Specification Framework Document - Part 2", June 2021.
[2] IEEE 802.11-19/1988r3, "Power Save for Multi-link", June 2020.

Definitions for other certain words and phrases are provided throughout this patent document. Those of ordinary skill in the art should understand that in many if not most instances, such definitions apply to prior as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIGURE 1 illustrates an example wireless network according to various embodiments of the present disclosure;
FIGURE 2a illustrates an example AP according to various embodiments of the present disclosure;
FIGURE 2b illustrates an example STA according to various embodiments of this disclosure;
FIGURE 3 illustrates an example of a negotiation procedure between APs for MAP coordination according to various embodiments of the present disclosure;
FIGURE 4 illustrates an example of a negotiation procedure between APs for TDMA-like MAP coordination according to various embodiments of the present disclosure;
FIGURE 5 illustrates an example of interfering TWT SPs of a BSS link and an OBSS link according to various embodiments of the present disclosure;
FIGURES 6 and 7 illustrate examples of further updates to TWT agreements of interfering links to account for different QoS requirements according to various embodiments of the present disclosure;
FIGURE 8 illustrates an example scenario using MAP coordination between APs to protect a restricted TWT SP through quiet interval management according to various embodiments of the present disclosure;
FIGURE 9 illustrates an example process for sending a quieting request in MAP coordination according to various embodiments of the present disclosure;
FIGURE 10 illustrates an example scenario using MAP coordination between APs to protect a restricted TWT SP through quiet interval management using a Deprioritized variant Quiet element according to various embodiments of the present disclosure;
FIGURE 11 illustrates an example of usage of a Quiet element by a neighbor AP in the coordinating set according to various embodiments of the present disclosure;
FIGURE 12 illustrates an example of usage of a Deprioritized variant Quiet element according to various embodiments of the present disclosure;
FIGURE 13 illustrates an example of a scenario in which a coordinating AP distributes rTWT schedule information to the coordinating set according to various embodiments of the present disclosure;
FIGURE 14 illustrates an example format of a Control field of a TWT element that includes a MAP Quieting Request subfield according to various embodiments of the present disclosure;
FIGURE 15 illustrates an example format of a Request Type field of a Restricted TWT Parameter Set field that includes a Multi-AP Quieting Request subfield according to various embodiments of the present disclosure;
FIGURE 16 illustrates an example format of a Broadcast TWT info subfield of a Restricted TWT Parameter Set field that includes a Quieting Request subfield according to various embodiments of the present disclosure;
FIGURE 17 illustrates an example format of a Broadcast TWT info subfield of a Restricted TWT Parameter Set field that includes Quieting Request subfields with priority levels according to various embodiments of the present disclosure;
FIGURE 18 illustrates an example format of a Deprioritized variant Quiet element according to various embodiments of the present disclosure; and
FIGURE 19 illustrates an example process for sharing TWT parameters between coordinating APs to perform MAP coordination according to various embodiments of the present disclosure.

### Mode for the Invention

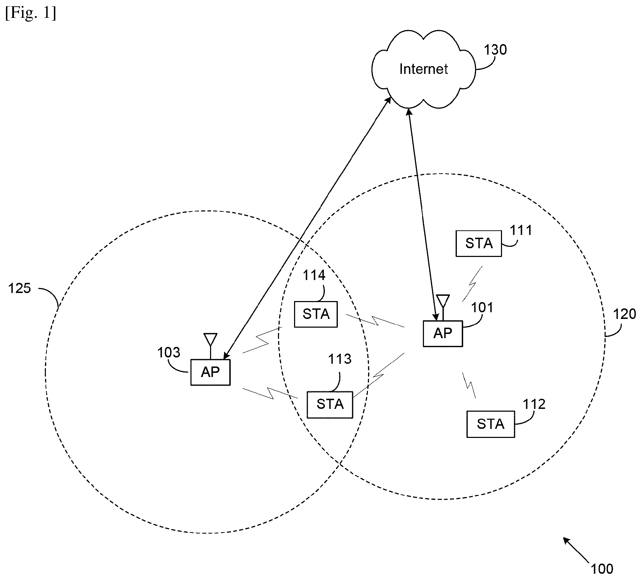

FIGURES 1 through 19, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Embodiments of the present disclosure recognize that, with respect to MAP coordination as introduced in 802.11be, whereby multiple APs cooperate together to enhance performance, although though power coordination through coordinated spatial reuse, beamforming coordination through nulling and joint transmission, and frequency coordination through coordinated orthogonal frequency division multiple access (OFDMA) are agreed as release-2 features, each comes with some cost associated with it.

For example, in coordinated spatial reuse, power backoff is applied which causes performance degradation. Even though the performance degradation is more balanced with coordinated spatial reuse in 802.11be (compared to legacy spatial reuse in 802.11ax) because power backoff is applied in a balanced way between coordinating APs, the power backoff will still make the performance worse than the case without power backoff (if systems are able to mitigate the interference). In coordinated beamforming, nulling comes with the cost of cross-channel CSI measurements and also nulling causes beam misalignment for the served STA. In joint transmission, the overhead of data sharing along with tight time and phase synchronization requirements makes the implementation very challenging.

On the other hand, coordinated OFDMA mitigates the interference by allocating interfering links in different frequency resources. However, when operating on large frequency bandwidths, it becomes challenging to allocate orthogonal frequency resources and hence it may sometimes be necessary to operate in a smaller bandwidth to be able to utilize coordinated OFDMA.

Accordingly, embodiments of the present disclosure provide apparatuses and methods that maintain the performance while mitigating the interference with limited requirements on information sharing and limited synchronization requirements. For example, one approach is to coordinate between multiple APs in a time division multiple access (TDMA) manner. This can utilize many features existing in standards such as power saving modes and TWT features. However, the current standards do not provide enough tools to utilize TDMA cooperation between multiple APs. Information sharing between coordinating APs needs to be addressed in order to unleash the potential of such a level of coordination.

Some embodiments of the present disclosure provide a MAC-level coordination mechanism for MAP coordination utilizing TWT features of high efficiency (HE) and extremely high throughput (EHT) STAs that addresses the issue of interfering links in two or more different BSSs (*e.g.,* a sharing AP's BSS and a shared AP's overlapping BSS) through time-duplexing TWT's service periods (SP) to be non-overlapping. These solutions are also extended to both legacy and non-legacy links and links that do not support power saving modes.

Some embodiments of the present disclosure provide a procedure for MAC-level negotiation and information sharing between APs in MAP coordination utilizing TWT features of HE and EHT STAs that addresses the issue of interfering links in two or more different BSSs (*e.g.,* a sharing AP's BSS and a shared AP's overlapping BSS) through sharing TWT information among cooperating APs and facilitating the negotiation between those APs.

Embodiments of the present disclosure further recognize that in a dense deployment scenario where neighboring BSSs corresponding to two or more APs overlap each other, if one AP has an rTWT schedule for which the corresponding scheduled STAs fall in a geographic area that has overlap with a neighbor BSS, then the rTWT scheduled STAs would possibly face interference from the neighboring BSS's operation.

Since the objective of restricted TWT is to provide better protection for latency-sensitive traffic for its member STAs, embodiments of the present disclosure provide apparatuses and methods that handle interference from neighboring BSS activities during a restricted TWT service period by managing the Quiet interval in the neighboring BSS.

FIGURE 1 illustrates an example wireless network 100 according to various embodiments of the present disclosure. The embodiment of the wireless network 100 shown in FIGURE 1 is for illustration only. Other embodiments of the wireless network 100 could be used without departing from the scope of this disclosure.

The wireless network 100 includes access points (APs) 101 and 103. The APs 101 and 103 communicate with at least one network 130, such as the Internet, a proprietary Internet Protocol (IP) network, or other data network. The AP 101 provides wireless access to the network 130 for a plurality of stations (STAs) 111-114 within a coverage area 120 of the AP 101. The APs 101-103 may communicate with each other and with the STAs 111-114 using WI-FI or other WLAN communication techniques.

Depending on the network type, other well-known terms may be used instead of "access point" or "AP," such as "router" or "gateway." For the sake of convenience, the term "AP" is used in this disclosure to refer to network infrastructure components that provide wireless access to remote terminals. In WLAN, given that the AP also contends for the wireless channel, the AP may also be referred to as a STA. Also, depending on the network type, other well-known terms may be used instead of "station" or "STA," such as "mobile station," "subscriber station," "remote terminal," "user equipment," "wireless terminal," or "user device." For the sake of convenience, the terms "station" and "STA" are used in this disclosure to refer to remote wireless equipment that wirelessly accesses an AP or contends for a wireless channel in a WLAN, whether the STA is a mobile device (such as a mobile telephone or smartphone) or is normally considered a stationary device (such as a desktop computer, AP, media player, stationary sensor, television, etc.).

Dotted lines show the approximate extents of the coverage areas 120 and 125, which are shown as approximately circular for the purposes of illustration and explanation only. It should be clearly understood that the coverage areas associated with APs, such as the coverage areas 120 and 125, may have other shapes, including irregular shapes, depending upon the configuration of the APs and variations in the radio environment associated with natural and man-made obstructions.

As described in more detail below, one or more of the APs may include circuitry and/or programming for sharing TWT information between APs to facilitate negotiations for MAP coordination in a WLAN. Although FIGURE 1 illustrates one example of a wireless network 100, various changes may be made to FIGURE 1. For example, the wireless network 100 could include any number of APs and any number of STAs in any suitable arrangement. Also, the AP 101 could communicate directly with any number of STAs and provide those STAs with wireless broadband access to the network 130. Similarly, each AP 101-103 could communicate directly with the network 130 and provide STAs with direct wireless broadband access to the network 130. Further, the APs 101 and/or 103 could provide access to other or additional external networks, such as external telephone networks or other types of data networks.

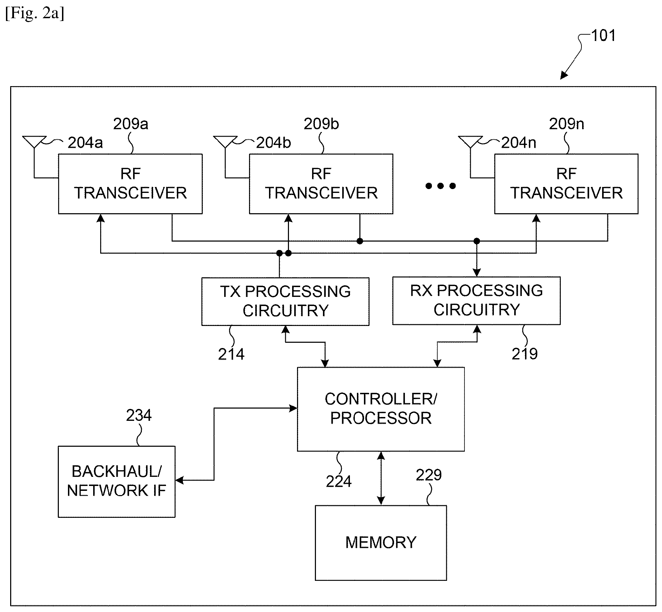

FIGURE 2a illustrates an example AP 101 according to various embodiments of the present disclosure. The embodiment of the AP 101 illustrated in FIGURE 2a is for illustration only, and the AP 103 of FIGURE 1 could have the same or similar configuration. However, APs come in a wide variety of configurations, and FIGURE 2a does not limit the scope of this disclosure to any particular implementation of an AP.

The AP 101 includes multiple antennas 204a-204n, multiple RF transceivers 209a-209n, transmit (TX) processing circuitry 214, and receive (RX) processing circuitry 219. The AP 101 also includes a controller/processor 224, a memory 229, and a backhaul or network interface 234. The RF transceivers 209a-209n receive, from the antennas 204a-204n, incoming RF signals, such as signals transmitted by STAs in the network 100. The RF transceivers 209a-209n down-convert the incoming RF signals to generate IF or baseband signals. The IF or baseband signals are sent to the RX processing circuitry 219, which generates processed baseband signals by filtering, decoding, and/or digitizing the baseband or IF signals. The RX processing circuitry 219 transmits the processed baseband signals to the controller/processor 224 for further processing.

The TX processing circuitry 214 receives analog or digital data (such as voice data, web data, e-mail, or interactive video game data) from the controller/processor 224. The TX processing circuitry 214 encodes, multiplexes, and/or digitizes the outgoing baseband data to generate processed baseband or IF signals. The RF transceivers 209a-209n receive the outgoing processed baseband or IF signals from the TX processing circuitry 214 and up-converts the baseband or IF signals to RF signals that are transmitted via the antennas 204a-204n.

The controller/processor 224 can include one or more processors or other processing devices that control the overall operation of the AP 101. For example, the controller/ processor 224 could control the reception of forward channel signals and the transmission of reverse channel signals by the RF transceivers 209a-209n, the RX processing circuitry 219, and the TX processing circuitry 214 in accordance with well-known principles. The controller/processor 224 could support additional functions as well, such as more advanced wireless communication functions. For instance, the controller/processor 224 could support beam forming or directional routing operations in which outgoing signals from multiple antennas 204a-204n are weighted differently to effectively steer the outgoing signals in a desired direction. The controller/processor 224 could also support OFDMA operations in which outgoing signals are assigned to different subsets of subcarriers for different recipients (*e.g.,* different STAs 111-114). Any of a wide variety of other functions could be supported in the AP 101 by the controller/processor 224 including sharing TWT information between APs to facilitate negotiations for MAP coordination. In some embodiments, the controller/processor 224 includes at least one microprocessor or microcontroller. The controller/processor 224 is also capable of executing programs and other processes resident in the memory 229, such as an OS. The controller/processor 224 can move data into or out of the memory 229 as required by an executing process.

The controller/processor 224 is also coupled to the backhaul or network interface 234. The backhaul or network interface 234 allows the AP 101 to communicate with other devices or systems over a backhaul connection or over a network. The interface 234 could support communications over any suitable wired or wireless connection(s). For example, the interface 234 could allow the AP 101 to communicate over a wired or wireless local area network or over a wired or wireless connection to a larger network (such as the Internet). The interface 234 includes any suitable structure supporting communications over a wired or wireless connection, such as an Ethernet or RF transceiver. The memory 229 is coupled to the controller/processor 224. Part of the memory 229 could include a RAM, and another part of the memory 229 could include a Flash memory or other ROM.

As described in more detail below, the AP 101 may include circuitry and/or programming for sharing TWT information between APs to facilitate negotiations for MAP coordination. Although FIGURE 2a illustrates one example of AP 101, various changes may be made to FIGURE 2a. For example, the AP 101 could include any number of each component shown in FIGURE 2a. As a particular example, an access point could include a number of interfaces 234, and the controller/processor 224 could support routing functions to route data between different network addresses. As another particular example, while shown as including a single instance of TX processing circuitry 214 and a single instance of RX processing circuitry 219, the AP 101 could include multiple instances of each (such as one per RF transceiver). Alternatively, only one antenna and RF transceiver path may be included, such as in legacy APs. Also, various components in FIGURE 2a could be combined, further subdivided, or omitted and additional components could be added according to particular needs.

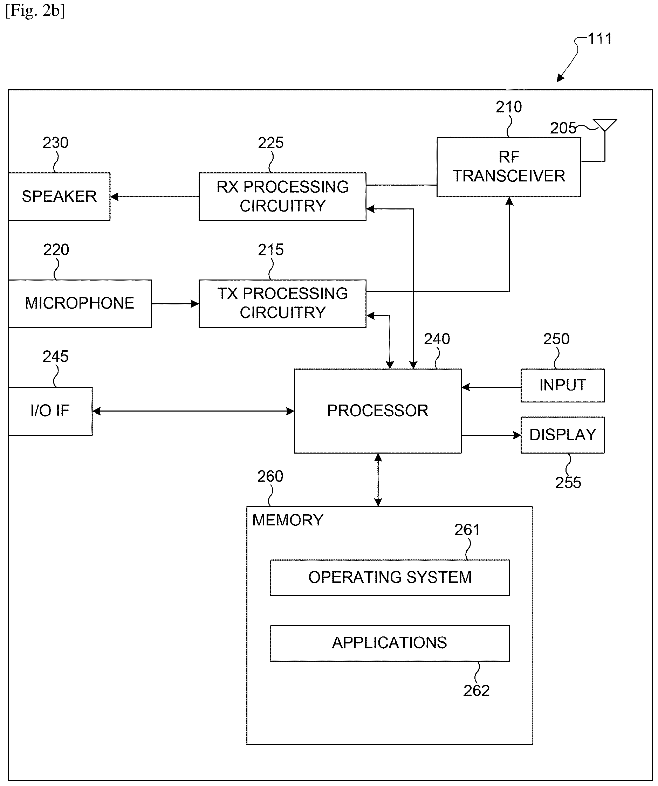

FIGURE 2b illustrates an example STA 111 according to various embodiments of this disclosure. The embodiment of the STA 111 illustrated in FIGURE 2b is for illustration only, and the STAs 111-115 of FIGURE 1 could have the same or similar configuration. However, STAs come in a wide variety of configurations, and FIGURE 2b does not limit the scope of this disclosure to any particular implementation of a STA.

The STA 111 includes antenna(s) 205, a radio frequency (RF) transceiver 210, TX processing circuitry 215, a microphone 220, and receive (RX) processing circuitry 225. The STA 111 also includes a speaker 230, a controller/processor 240, an input/output (I/O) interface (IF) 245, a touchscreen 250, a display 255, and a memory 260. The memory 260 includes an operating system (OS) 261 and one or more applications 262.

The RF transceiver 210 receives, from the antenna(s) 205, an incoming RF signal transmitted by an AP of the network 100. The RF transceiver 210 down-converts the incoming RF signal to generate an intermediate frequency (IF) or baseband signal. The IF or baseband signal is sent to the RX processing circuitry 225, which generates a processed baseband signal by filtering, decoding, and/or digitizing the baseband or IF signal. The RX processing circuitry 225 transmits the processed baseband signal to the speaker 230 (such as for voice data) or to the controller/processor 240 for further processing (such as for web browsing data).

The TX processing circuitry 215 receives analog or digital voice data from the microphone 220 or other outgoing baseband data (such as web data, e-mail, or interactive video game data) from the controller/processor 240. The TX processing circuitry 215 encodes, multiplexes, and/or digitizes the outgoing baseband data to generate a processed baseband or IF signal. The RF transceiver 210 receives the outgoing processed baseband or IF signal from the TX processing circuitry 215 and up-converts the baseband or IF signal to an RF signal that is transmitted via the antenna(s) 205.

The controller/processor 240 can include one or more processors and execute the basic OS program 261 stored in the memory 260 in order to control the overall operation of the STA 111. In one such operation, the main controller/processor 240 controls the reception of forward channel signals and the transmission of reverse channel signals by the RF transceiver 210, the RX processing circuitry 225, and the TX processing circuitry 215 in accordance with well-known principles. The main controller/processor 240 can also include processing circuitry configured to detect interference from a neighboring BSS and inform the associated AP of the interference. In some embodiments, the controller/processor 240 includes at least one microprocessor or microcontroller.

The controller/processor 240 is also capable of executing other processes and programs resident in the memory 260, such as operations for detecting interference from a neighboring BSS and inform the associated AP of the interference. The controller/processor 240 can move data into or out of the memory 260 as required by an executing process. In some embodiments, the controller/processor 240 is configured to execute a plurality of applications 262, such as applications for detect interference from a neighboring BSS and inform the associated AP of the interference. The controller/processor 240 can operate the plurality of applications 262 based on the OS program 261 or in response to a signal received from an AP. The main controller/ processor 240 is also coupled to the I/O interface 245, which provides STA 111 with the ability to connect to other devices such as laptop computers and handheld computers. The I/O interface 245 is the communication path between these accessories and the main controller 240.

The controller/processor 240 is also coupled to the touchscreen 250 and the display 255. The operator of the STA 111 can use the touchscreen 250 to enter data into the STA 111. The display 255 may be a liquid crystal display, light emitting diode display, or other display capable of rendering text and/or at least limited graphics, such as from web sites. The memory 260 is coupled to the controller/processor 240. Part of the memory 260 could include a random-access memory (RAM), and another part of the memory 260 could include a Flash memory or other read-only memory (ROM).

Although FIGURE 2b illustrates one example of STA 111, various changes may be made to FIGURE 2b. For example, various components in FIGURE 2b could be combined, further subdivided, or omitted and additional components could be added according to particular needs. In particular examples, the STA 111 may include any number of antenna(s) 205 for MIMO communication with an AP 101. In another example, the STA 111 may not include voice communication or the controller/ processor 240 could be divided into multiple processors, such as one or more central processing units (CPUs) and one or more graphics processing units (GPUs). Also, while FIGURE 2b illustrates the STA 111 configured as a mobile telephone or smartphone, STAs could be configured to operate as other types of mobile or stationary devices.

When considering interfering links in at least two neighboring BSSs corresponding to the APs in a coordinating set (*i.e.,* main/target BSS and OBSSs), a MAP coordination mechanism would mitigate the interference between the two links while trying to maintain the performance in each link without degradation. If a victim link uses a power saving mechanism such as TWT, then when the victim link sees large interference from a neighboring OBSS it will be awake only for part of the time while dozing for large periods of time and, similarly, interfering links will often times follow a power saving profile such as TWT. Sharing TWT information with coordinated APs would allow the coordinated APs to mitigate interference to the victim link through MAP coordination. Accordingly, mechanisms for utilizing the victim link's TWT configuration between coordinated APs to facilitate MAP coordination are provided below.

A simple example can be illustrated using FIGURE 1 as a dense deployment scenario wherein BSSs corresponding to AP 101 and AP 103 overlap with each other, and assuming that for an HE or EHT STA (*e.g*., STAs 113 and 114), an individual TWT agreement (or broadcast TWT schedule) is agreed upon between an AP and its associated STA (or group of STAs). Although the embodiments below are discussed with respect to a TWT agreement, it is understood that they could be performed with a broadcast TWT schedule instead. For the purposes of this disclosure "a TWT operation" may be used to refer to an individual TWT agreement or to a broadcast TWT schedule. In this example, AP 103 may obtain a TXOP to serve STA 114. The link between AP 103 and STA 114 is denoted as Link-1. At the same time, AP 101 may be serving STA 113 on a link denoted as Link-2 (the link between AP 101 and STA 113). Additionally, AP 101 and AP 103 operate on the same frequency band. In this simple example, Link-2 may be considered to be in the OBSS to the BSS that contains Link-1. In the downlink (DL) direction, Link-1 and Link-2 will cause interference to each other, leading to performance degradation.

According to various embodiments of the present disclosure, STA 114 may detect high DL interference from the OBSS, making STA 114 a victim STA of interference from AP 101, and making Link-1 a victim link (or suffering link) of Link-2, which is the interfering link. In such cases, STA 114 may inform its AP 103 that it is detecting high interference from the OBSS. In some embodiments, the STA 114 can send AP 103 information on the link (Link-2) or the AP (AP 101) that is causing the interference while informing AP 103 of the interference.

When AP 103 has obtained a TXOP (and is thus a sharing AP) for transmitting to STA 114, it may announce its MAP coordination capability to neighboring coordinated APs, including AP 101, and indicate to them that it has obtained the TXOP. When AP 103 announces its MAP coordination capability, it includes the TWT agreement for Link-1 - the victim link - to facilitate a negotiation procedure with the coordinated APs to avoid interference with the victim link. For example, AP 103 can share the TWT Parameter Set field of the victim link's TWT agreement (including Link-1's TWT SP) with the coordinated APs. Sharing the TWT Parameter Set field information of the victim link with the coordinated APs allows them to determine the time slots where interference management needs to be handled. In the announcement frame, interfering link information (including the TWT agreement and TX-RX information of the interfering link, *e.g.,* Link-2) may also be shared. Coordinated APs, such as AP 101, can then act upon the shared TWT agreement information.

Coordinated APs (*e.g.,* AP 101) can respond to the MAP coordination announcement frame from the sharing AP 103 as part of the negotiation process. Backhaul communication between the coordinating APs (*e.g.,* AP 101 and AP 103) may be used for the negotiation process. When coordinated AP 101 receives the MAP coordination announcement frame carrying the TWT agreement of the victim link Link-1, it may send a response frame to sharing AP 103 that notifies AP 103 as to whether AP 101 is able to participate in MAP coordination during the TXOP.

In one embodiment, when AP 101 receives the MAP coordination announcement frame from AP 103, it renegotiates the TWT agreement on Link-2 with STA 113 based on the TWT parameters of Link-1 so that the TWT SP for Link-2 is not overlapping with the TWT SP for Link-1. When AP 101 responds to the MAP coordination announcement frame with its capability for joining MAP coordination with AP 103, AP 101 may include the renegotiated TWT agreement for Link-2 in the response frame ( *e.g.,* AP 101 may share the TWT Parameter Set field of Link-2 with AP 103).

In other embodiments, when AP 101 responds with its capability for joining MAP coordination with AP 103, it can suggest adjustment or modification of Link-1's TWT agreement so that the TWT SP of Link-1 does not overlap the TWT SP of Link-2. This can happen in a response frame from AP 101 to AP 103 informing AP 103 of a suggested TWT setup (*e.g.*, suggested TWT parameters) for Link-1 and indicating that AP 103 can join AP 101 in MAP coordination if the suggested TWT setup is adopted for Link-1. In other embodiments, the response frame from AP 101 to AP 103 informing AP 103 can inform AP 103 that adjustment or modification of Link-1's TWT agreement is needed in order for AP 101 to participate in MAP coordination with AP 103 and can include Link-2's TWT agreement (*e.g.,* the TWT Parameter Set field of Link-2). AP 103 may then determine whether to adjust Link-1's TWT agreement so that the TWT SP for Link-2 is not overlapping with the TWT SP for Link-1.

In other embodiments, AP 101 may respond by declining to participate in MAP coordination with AP 103.

In all cases in this example, the final decision of the sharing AP on which coordinated APs to include in the shared AP set that are going to participate in MAP operation is announced after receiving the response from all coordinated APs. The information sharing between coordinating APs relies on including enough information of the TWT agreement (whether it is individual TWT or part of a broadcast TWT) of the victim's link so that coordinated APs can respond accordingly.

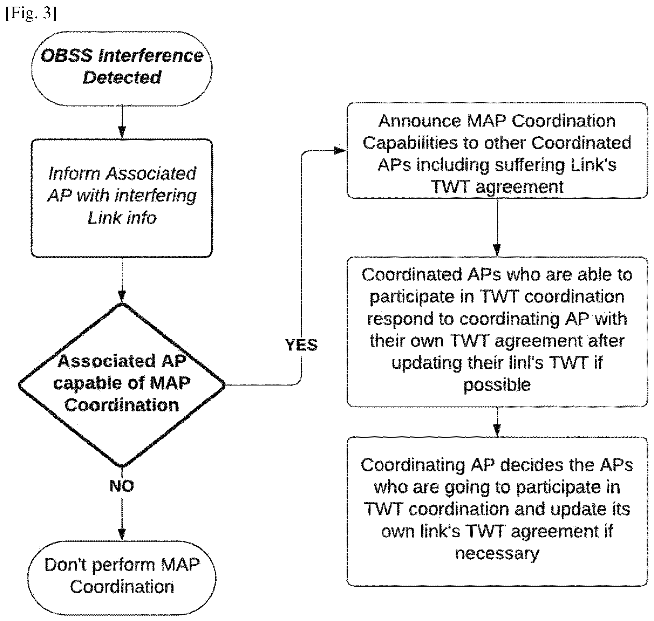

FIGURE 3 illustrates an example of a negotiation procedure between APs for MAP coordination according to various embodiments of the present disclosure. The example of FIGURE 3 corresponds to the above embodiments, and is illustrated from the viewpoint of the victim STA and its serving AP. The victim STA may be STA 114 and its serving AP may be AP 103, while the interfering STA may be STA 113 and its associated AP in the OBSS may be AP 101. However, it is understood that the STAs could be any other STA device, and the APs could be any AP device.

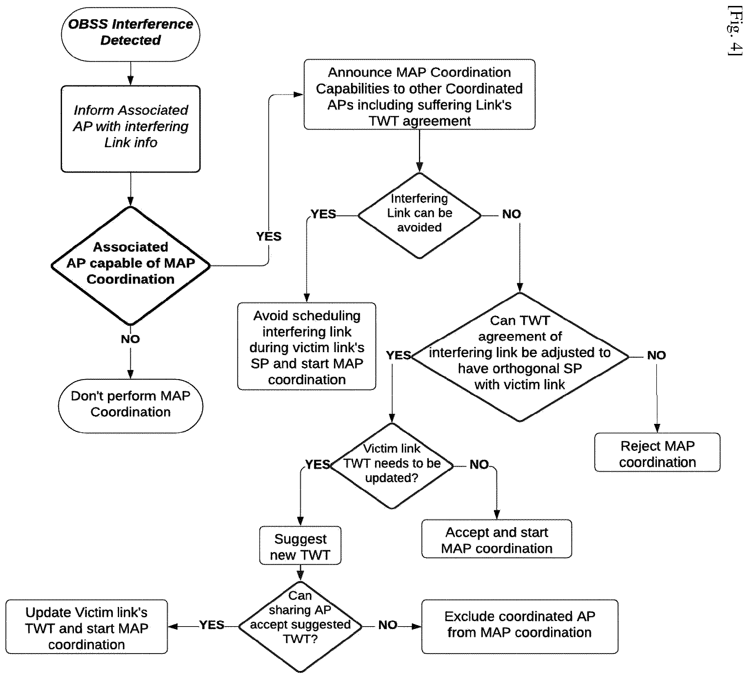

In some embodiments, the MAP coordination negotiation between APs can facilitate a TDMA-like coordination. Extending the example discussed above, the coordinated AP 101 may respond to a MAP coordination announcement frame from the coordinated AP 101 by sending a response frame that includes one of the below MAP coordination responses. FIGURE 4 illustrates an example of a negotiation procedure between APs for TDMA-like MAP coordination according to various such embodiments of the present disclosure.

When coordinated AP 101 declines to participate in MAP coordination with sharing AP 103, the response from AP 101 to the MAP coordination announcement frame may be a TWT agreement modification rejection message. This may occur if the coordinated AP is not able to accommodate the TWT agreement of the victim link due to some requirement for the interfering link in the OBSS. In this case, the sharing AP will not include coordinated AP 101 as a shared AP for MAP operation. As a result, interference will still impact the victim link. To handle this, the victim link can continue to work with a modulation and coding scheme (MCS) that is adequate to the interference level, the coordinating APs may negotiate a different coordination mechanism, or the victim link can move to a different channel (*e.g.,* a different frequency).

If coordinated AP 101 is able to accommodate the TWT agreement of the victim link, then the response from AP 101 to the MAP coordination announcement frame may be a TWT agreement modification acceptance message. This can happen, for example, if the coordinated AP is able to negotiate a new TWT agreement for the interfering link that will reduce or resolve the interference caused on the victim link. Another option is that the coordinated AP can limit the scheduler from scheduling the interfering link's STA during the victim link's SP duration, thereby avoiding the victim link's SP without modifying any TWT agreements. This can be useful in many cases such as the case where interfering links don't support power saving modes.

When coordinated AP 101 suggests an adjustment to Link-1's TWT agreement, the response from AP 101 to the MAP coordination announcement frame may be a TWT agreement modification suggestion message. This may occur if the coordinated AP is not able to accommodate the TWT agreement of the victim link as is but would be able to work together with the sharing AP if the sharing AP were to update the victim link's TWT agreement to the suggested one. In this case, it is up to the sharing AP whether to update the TWT agreement of the victim link and include the coordinated AP as a shared AP for MAP transmission or not to update the victim link's TWT agreement and exclude the coordinated AP from the shared AP set. The suggestion is made only once, and it is either accommodated or rejected by the sharing AP to avoid back and forth negotiation.

In some cases, either the sharing or shared AP or both may require changing their TWT agreement based on certain changes in the links requirements in either the sharing AP's BSS or the shared AP's BSS (the OBSS). In such a case, the AP that wants to update its TWT agreement announces its intention to the sharing AP and a new round of negotiation may start. In other cases, the sharing AP may announce that MAP coordination is no longer needed or is needed with a new set of requirements. This requires infrequent periodic/aperiodic handshaking between sharing and shared APs.

In other embodiments, a hierarchical network topology is adopted where AP 101 and AP 103 are both connected to a coordinating AP that receives TWT agreements for both Link-1 and Link-2 and then informs AP 101 and AP 103 with suggested TWT agreement updates. A coordinating set of APs can be predetermined when the network is deployed based on the network topology.

Furthermore, although the above examples focus on the case in which both links support TWT, they can be extended to other cases in which the interfering link does not support TWT, but the shared AP can avoid scheduling the interfering link in the TWT SP duration of the victim link. Additionally, the case in which more than one interfering link exists can be included. In such a case, non-legacy interfering links can be part of a broadcast TWT schedule having a non-overlapping SP. For other links (including legacy or non-legacy links), more STAs can be included in the scheduling avoidance sessions to protect the victim link.

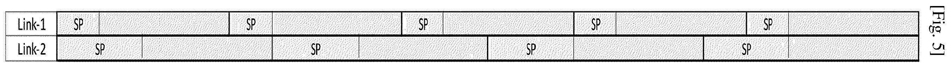

When one of the BSS's links and one of the OBSS's links interfere, then both links have overlapping TWT SPs. FIGURE 5 illustrates an example of interfering TWT SPs of a BSS link and an OBSS link according to various embodiments of the present disclosure. In the example of FIGURE 5, the BSS link is Link-1 and the OBSS link is Link-2, as in the above examples. Link-1 is the link between the coordinating AP of the BSS and the victim STA, and Link-2 is the link between a coordinated AP of the OBSS and the interfering STA.

When the coordinating AP announces its capability for TWT MAP coordination through an announcement frame, it shares the TWT agreement of Link-1 (*e.g.,* the TWT Parameter Set field of Link-1) with the coordinated APs. A coordinated AP updates the TWT SP of Link-2 by adding fixed offset to the start of the SP so that the SPs for Link-1 and Link-2 are not overlapped.

However, coordinating links generally have different quality of service (QoS) requirements. Hence, TWT coordination for non-overlapping SPs should consider that. In the example of FIGURE 5, due to different QoS requirement on both links, the SP of each link may be of different length, and although adding a fixed offset may guarantee non-overlapping SPs for the first TWT round, drifting would occur, and the SPs will overlap in later wake-up times. Therefore, a further update to the TWT agreements may be required in addition to adding an SP offset.

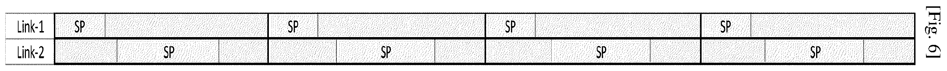

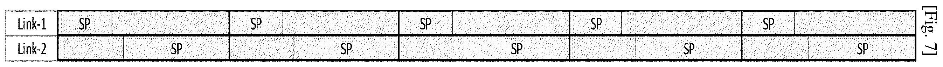

FIGURES 6 and 7 illustrate examples of further updates to TWT agreements of interfering links to account for different QoS requirements according to various embodiments of the present disclosure. In the example of FIGURE 6, the longer TWT cycles are accommodated by increasing the sleep duration for Link-1. In the example of FIGURE 7, the original TWT agreement of Link-1 is maintained, and the sleep duration of Link-2 is shortened. This may include changing the power saving profile of the STA on Link-2. Other combinations may also be done depending on the traffic requirements and the QoS requirements of both links.

Another option to account for different QoS requirements is to calculate the duration where SPs will not overlap and perform a one-time calculation of how often wake-up and sleep-time are adjusted accordingly in coming rounds of TWT. For this level of coordination between APs to be possible, enough information should be shared between both APs to facilitate a TWT negotiation process, which should take place to be able to achieve frame-level synchronization between the TWT agreements of the APs.

The above examples are discussed in terms of DL interference and DL MAP coordination; however, a similar approach may be used for uplink (UL) interference. In some such embodiments, when an AP senses high interference coming from a neighboring OBSS's UL transmission, the AP starts announcement of MAP coordination if it is capable of MAP coordination and a similar approach to DL coordination may be followed.

In dense deployment scenarios, if one AP has a restricted TWT schedule, for which the corresponding scheduled STA falls in a geographic area that has overlap with a neighbor BSS (OBSS), then the rTWT scheduled STA would possibly face interference from operations of the neighboring BSS. This interference during the restricted TWT SP corresponding to the rTWT schedule can be managed by MAP coordination through quiet interval management.

According to some embodiments, neighboring APs can share their restricted TWT schedule information with each other and one rTWT scheduling AP can request its neighboring APs to quiet their transmissions for their STAs during the rTWT scheduling AP's restricted TWT service periods. If a neighboring AP in the coordinating set accepts the quieting request, that AP can send a Quiet element to its associated STAs so that the corresponding Quiet interval protects the restricted TWT service period for which the requesting AP sent the quieting request.

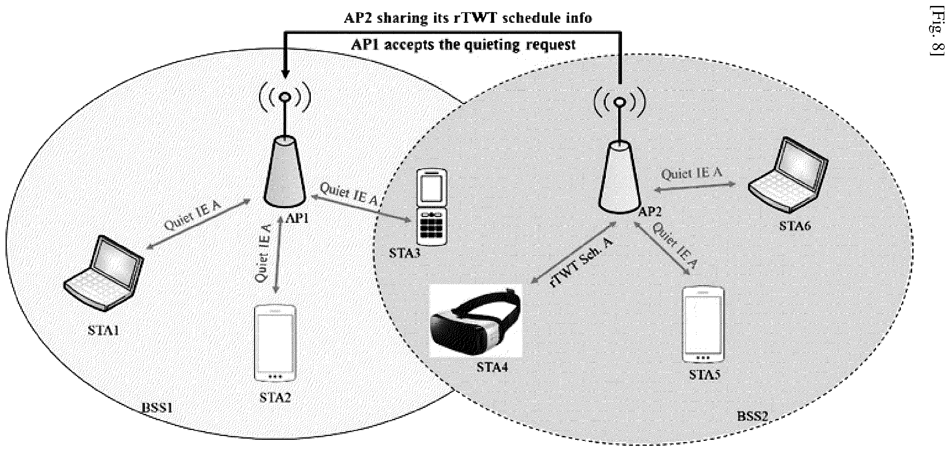

FIGURE 8 illustrates an example scenario using MAP coordination between APs to protect a restricted TWT SP through quiet interval management according to various embodiments of the present disclosure. The example scenario of FIGURE 8 may be a modification of the example scenario of FIGURE 1. For example, AP2 may correspond to sharing AP 103, AP1 may correspond to coordinated AP 101, STA4 may correspond to victim STA 114, and STA3 may correspond to interfering STA 113. The link between STA4 and AP2 may correspond to Link-1, and the link between STA3 and AP1 may correspond to Link-2 in this case.

AP2 announces one restricted TWT schedule, namely, rTWT schedule A. STA4 is a device that has latency sensitive traffic, and hence STA4, after negotiation with AP2, becomes a member of the rTWT schedule A. However, STA4 is situated towards the BSS boundary and would face interference from AP1 if transmission occurs in BSS1 during the TWT service period corresponding to rTWT schedule A in BSS2. This interference can cause higher contention for STA4 even though STA4 is a member of an rTWT schedule created by AP2. Hence, STA4's latency-sensitive applications can suffer from this interference.

In order to minimize the interference towards restricted TWT scheduled STAs (*e.g.,* STA4), AP2 shares its restricted TWT schedule information with AP1. That is, AP2 shares TWT information corresponding to rTWT schedule A with AP1. Additionally, AP2 sends a quieting request to AP1 to quiet transmissions for AP1's STAs to protect rTWT schedule A. This may be done through backhaul communications between AP1 and AP2.

If AP1 accepts AP2's channel quieting request, it establishes a quiet interval corresponding to the rTWT service period of rTWT schedule A. In order to establish the quiet interval, AP1 sends Quiet element A to its member STAs (including STA4), which corresponds to the wake-up time for rTWT schedule A.

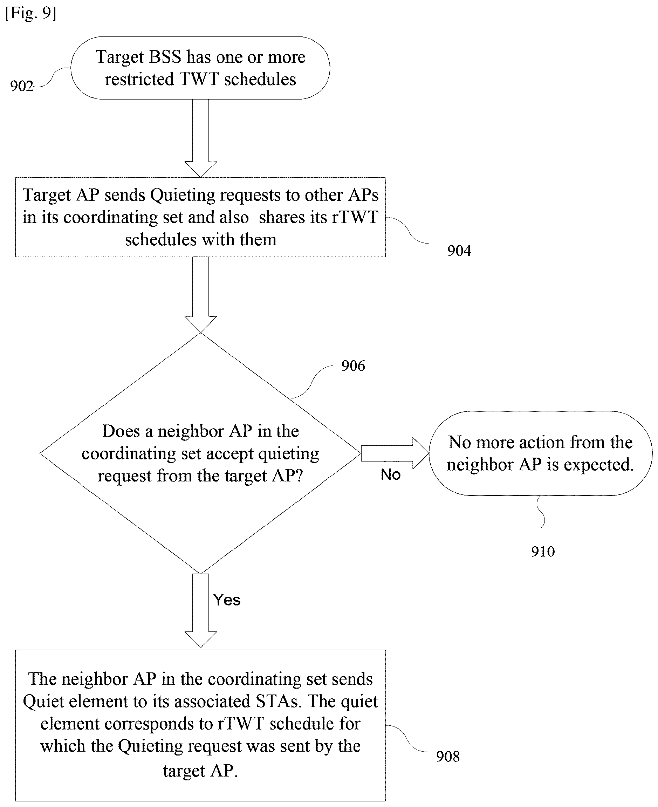

FIGURE 9 illustrates an example process for sending a quieting request in MAP coordination according to various embodiments of the present disclosure. The process begins at step 902, when the Target BSS has one or more restricted TWT schedules. Here, the Target BSS is the BSS for which the corresponding AP (referred to as the Target AP) intends to provide better protection for its rTWT schedules by reducing interference from its neighbor BSSs through MAP coordination. In this example, the Target AP may be AP2 (or AP 103).

In step 904, the Target AP sends quieting requests along with its restricted TWT schedule information to other neighboring APs in its coordinating set.

In step 906, if a neighboring AP in the coordinating set accepts the quieting request from the Target AP for a particular restricted TWT schedule, then it sends out a Quiet element to protect the requested rTWT service period (step 908). Otherwise, no more action is expected from the neighbor AP in regards of protecting the rTWT service period requested by the Target AP (step 910).

According to another embodiment, upon accepting the quieting request from the Target AP, the neighbor AP in the coordinating set may send a variant of Quiet element to the STAs in its BSS. The variant Quiet element can be a Deprioritized variant Quiet element. According to one embodiment, upon receiving a Deprioritized variant Quiet element, the STAs in the neighbor BSS may have the option of whether or not to abide by the Quiet interval (*i.e.,* the option to keep silent/not transmit). In some such embodiments, upon receiving the Deprioritized variant Quiet element, the STAs in the neighbor BSS follow the Quiet interval if some rules or conditions set by their BSS are satisfied.

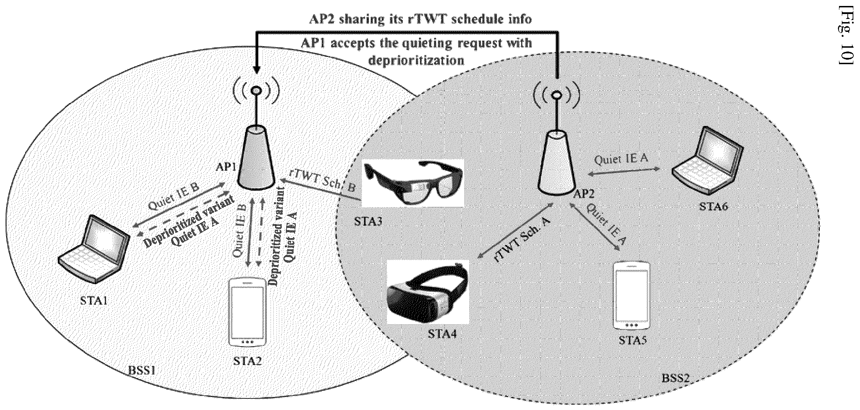

FIGURE 10 illustrates an example scenario using MAP coordination between APs to protect a restricted TWT SP through quiet interval management using a Deprioritized variant Quiet element according to various embodiments of the present disclosure. The example of FIGURE 10 is a modification of that of FIGURE 8 in which STA3, which is associated with AP1, also has latency sensitive traffic.

Accordingly, AP1 establishes restricted TWT schedule B with STA3 in order to protect the latency sensitive traffic for STA3. Therefore, other STAs (STA1 and STA2) in BSS1 abide by the Quiet interval corresponding to the Quiet element B, which corresponds to the restricted TWT service period B.

AP1 then receives the quieting request from AP2. The quieting request is made to protect STA4's restricted TWT service period A. Since AP1 has its own restricted TWT schedules in its BSS, AP1 decides to send a Deprioritized variant Quiet element A to its STAs. Upon receiving the Deprioritized variant Quiet element A, response to the Deprioritized variant Quiet element reception can be different for different STAs in BSS1. Some example rules for Deprioritized variant Quiet element adherence can be the following (other rules can also be set by the AP):

If a STA in a BSS already has its own restricted TWT schedule to protect its latency sensitive traffic, then if the STA receives a Deprioritized variant Quiet element, it can ignore the Deprioritized variant Quiet element. In FIGURE 10, STA3 has its own restricted TWT schedule (rTWT schedule B). Therefore, STA3 can ignore the Deprioritized variant Quiet element A corresponding to rTWT schedule A.

STAs in a BSS which are not members of a restricted TWT schedule follow the quiet interval corresponding to a Deprioritized variant Quiet element if the number of Quiet intervals corresponding to the Quiet element that the STAs need to follow (due to the presence of existing restricted TWT schedule in their own BSS) is less than a threshold. For such a STA, there can be a second threshold value for the number of Quiet intervals that the STA follows corresponding to Deprioritized variant Quiet elements that the STA receives corresponding to the quieting requests from one or more neighboring APs. In FIGURE 10, STA1 and STA2 follow two Quiet intervals - the first one corresponds to the Quiet element B for protection of STA3's rTWT schedule B, and the second one corresponds to Deprioritized variant Quiet element A for protection of STA4's rTWT schedule A.

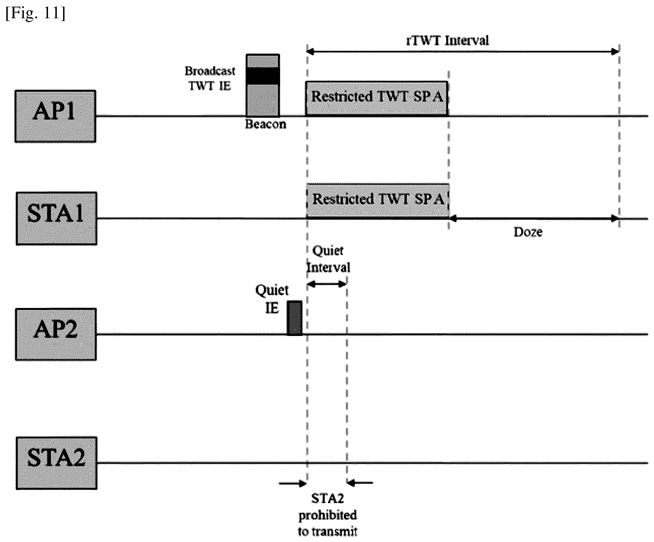

FIGURE 11 illustrates an example of usage of a Quiet element by a neighbor AP in the coordinating set according to various embodiments of the present disclosure. In FIGURE 11, STA1 is associated with AP1 and STA2 is associated with AP2. AP1 and AP2 form a multi-AP coordinating set.

STA1 receives a Beacon frame from AP1 that contains a Restricted TWT Parameter Set corresponding to restricted TWT SP A. Through the negotiation with AP1, STA1 becomes a member of the restricted TWT schedule corresponding to the Restricted TWT Parameter Set A. For better protection for the restricted TWT SP A, AP1 sends a quieting request to AP2, and AP2 accepts the request. Accordingly, STA2 receives a Quiet element from AP2. The Quiet interval corresponding to the Quiet element sent by AP2 overlaps with the beginning portion of the restricted TWT SP A. According to one embodiment, the duration of this Quiet interval is 1 TU. According to another embodiment, duration of the Quiet interval can be more than 1 TU and less than or equal to the duration of the restricted TWT SP A.

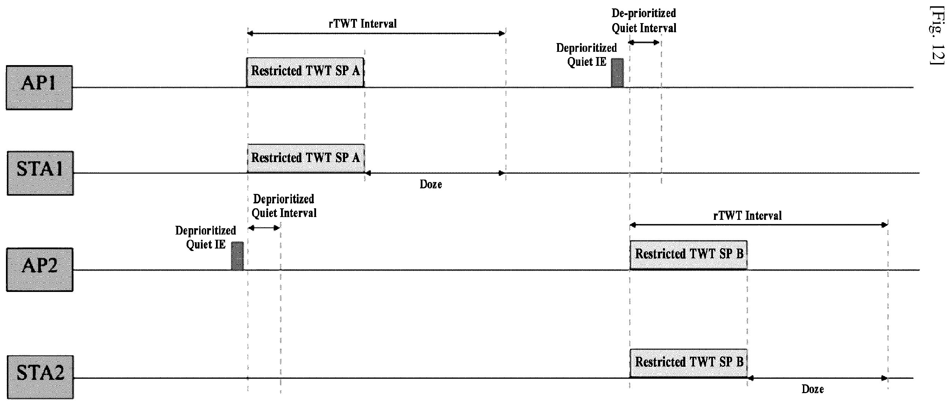

FIGURE 12 illustrates an example of usage of a Deprioritized variant Quiet element according to various embodiments of the present disclosure. In FIGURE 12, STA1 is associated with AP1 and STA2 is associated with AP2. AP1 and AP2 form a multi-AP coordinating set.

STA1 becomes a member of a restricted TWT schedule, Restricted TWT schedule A, announced by AP1. Moreover, STA2 becomes a member of a restricted TWT schedule, Restricted TWT schedule B, announced by AP2. AP1 sends a quieting request to AP2 to better protect its rTWT schedule corresponding to Restricted TWT SP A. Similarly, AP2 sends a quieting request to AP1 to better protect its rTWT schedule corresponding to Restricted TWT SP B. Both APs accept each other's quieting requests.

However, since each AP has its own restricted TWT schedule for protecting the latency sensitive traffic in its respective BSS, each AP decides to send a Deprioritized variant Quiet element (instead of a Quiet element) to the STAs in its respective BSS. Accordingly, the quiet interval corresponding to the Deprioritized variant Quiet element sent by AP2 to STA2 overlaps with the starting portion of restricted TWT SP A to protect latency sensitive traffic of STA1. Also, the quiet interval corresponding to the Deprioritized variant Quiet element sent by AP1 to STA1 overlaps with the starting portion of restricted TWT SP B to protect latency sensitive traffic of STA2.

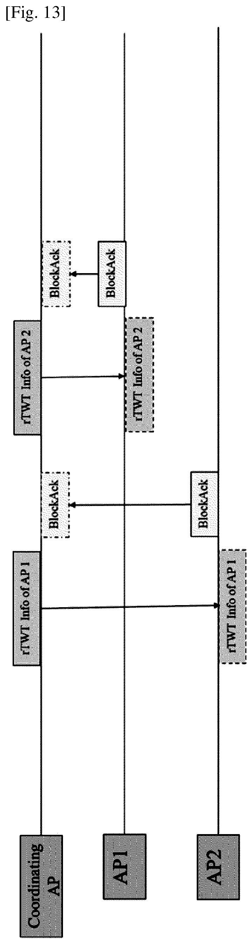

According to some embodiments, APs in a coordinating set can directly share each other's restricted TWT schedule information. According to some other embodiments, an AP can act as a coordinating AP for the coordinating set. The coordinating AP has restricted TWT information of all APs in the coordinating set and distributes the rTWT schedule information to the different APs. FIGURE 13 illustrates an example of a scenario in which a coordinating AP distributes rTWT schedule information to the coordinating set according to various embodiments of the present disclosure. In FIGURE 13, AP2 receives rTWT information of AP1 and AP1 receives rTWT information of AP2.

According to some embodiments, APs in the coordinating set can share restricted TWT information over the backhaul. According to some other embodiments, an AP can send individually addressed management frames to other APs that contain the restricted TWT information. In order to indicate the quieting request, an AP can send a broadcast TWT element to the neighboring AP in the coordination set. The broadcast TWT element may contain one or more Restricted TWT Parameter Sets. The Target AP (the AP which request for quieting from other APs) can indicate which restricted TWT schedule corresponding to the Restricted TWT Parameter Set the quieting request applies to.

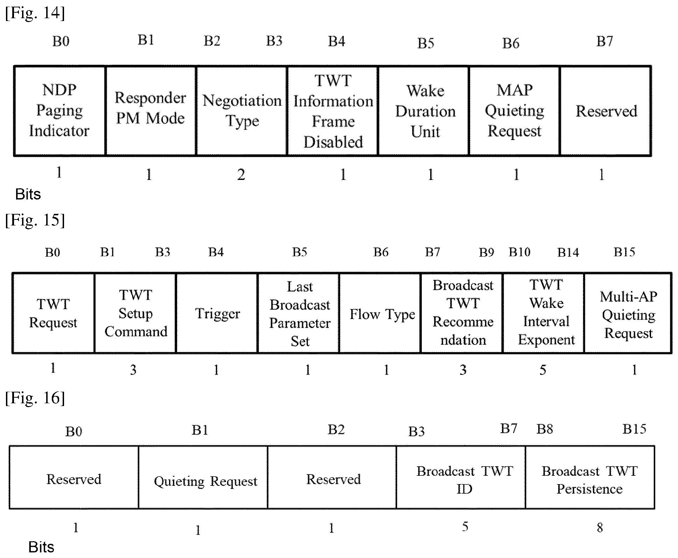

FIGURE 14 illustrates an example format of a Control field of a TWT element that includes a MAP Quieting Request subfield. In some embodiments, the MAP Quieting Request subfield in the Control field of the TWT element can be used to indicate a quieting request. If the bit corresponding to the MAP Quieting Request subfield is set to 1, it indicates that the TWT element includes a quieting request to the respective AP in the multi-AP coordinating set and the quieting request applies to all rTWT schedules contained in the TWT element. If the bit corresponding to MAP Quieting Request subfield is set to 0, it indicates that the quieting request, if indicated through other signaling, may not apply to all rTWT schedules carried in the TWT element. The MAP Quieting Request can also be indicated by bit 7 (B7).

FIGURE 15 illustrates an example format of a Request Type field of a Restricted TWT Parameter Set field that includes a Multi-AP Quieting Request subfield. In some embodiments, the Multi-AP Quieting Request subfield in the Request Type field in the Broadcast TWT Parameter Set field may indicate whether or not a quieting request applies to a particular rTWT schedule. If the Multi-AP Quieting Request subfield is set to 1, it indicates that a quieting request is placed to the recipient (AP in the coordinating set) of the TWT element and the quieting request applies to the restricted TWT schedule corresponding to the Restricted TWT Parameter Set. If the Multi-AP Quieting Request subfield is set to 0, it indicates that no quieting request has been made that applies to the restricted TWT schedule corresponding to the Restricted TWT Parameter Set.

FIGURE 16 illustrates an example format of a Broadcast TWT info subfield of a Restricted TWT Parameter Set field that includes a Quieting Request subfield. In some embodiments, whether a quieting request applies to a particular rTWT schedule can be indicated by a Quieting Request subfield of the Broadcast TWT Info subfield in a Restricted TWT Parameter Set field. If the Quieting Request subfield is set to 1, it indicates that a quieting request is placed to the recipient (AP in the coordinating set) of the TWT element and the quieting request applies to the restricted TWT schedule corresponding to the Restricted TWT Parameter Set. If the Quieting Request subfield is set to 0, it indicates that no quieting request has been made that applies to the restricted TWT schedule corresponding to the Restricted TWT Parameter Set. The Quieting Request subfield can also be indicated by bit 0 (B0) or bit 2 (B2) of the Broadcast TWT Info subfield.

According to yet another embodiment, whether or not a quieting request applies to a particular rTWT schedule can be indicated by the Broadcast TWT Recommendation field value in the Request Type field in a Broadcast TWT Parameter Set field corresponding to the restricted TWT schedule. Table 1 illustrates values of the Broadcast TWT Recommendation field according to such an embodiment. According to some embodiments, if the Broadcast TWT Recommendation field value is set to 5, it indicates that the corresponding broadcast TWT schedule is a restricted TWT schedule, and a quieting request has made for the corresponding restricted TWT schedule. According to some other embodiments, this indication can also be made by other values (value 6 and value 7) in the Broadcast TWT Recommendation field in Request Type field in Broadcast TWT Parameter Set corresponding to the restricted TWT schedule.

**[Table 1]**

| Broadcast TWT Recommendatio n field value | Description when transmitted in a broadcast TWT element |
|---|---|
| 0 | No constraints on the frames transmitted during a broadcast TWT SP |
| 1 | Frames transmitted during a broadcast TWT SP by a TWT scheduled STA are recommendedto be limited to solicited status and solicited feedback: |
| | - PS-Poll and QoS Null frames |
| | - Feedback can be contained in the QoS Control field or in the HE variant HT Control field of the frame, if either is present (see 26.5.2 (UL MU operation), 26.9 (Operating mode indication), 26.13 (Link adaptation using the HLA Control subfield), etc.) |
| | - Feedback in an HE TB feedback NDP, if solicited by the AP (see 26.5.7 (NDP feedback report procedure)) |
| | - BQRs (see 26.5.6 (Bandwidth query report operation)) |
| | - BSRs (see 26.5.5 (Buffer status report operation)) |
| | - Frames that are sent as part of a sounding feedback exchange (see 26.7 (HE sounding protocol)) |
| | - Management frames: Action or Action No Ack frames |
| | - Control response frames |
| | Trigger frames transmitted by the TWT scheduling AP during the broadcast TWT SP do not contain RUs for random access (see 26.8.3.2 (Rules for TWT scheduling AP) and 26.5.4 (UL OFDMA-based random access (UORA))), otherwise, there are no other restrictions on the frames transmitted by the TWT scheduling AP. |
| 2 | Frames transmitted during a broadcast TWT SP by a TWT scheduled STA are recommendedto be limited to solicited status and solicited feedback: |
| | - PS-Poll and QoS Null frames |
| | - Feedback can be contained in the QoS Control field or in the HE variant HT Control field of the frame, if either is present (see 26.5.2 (UL MU operation), 26.9 (Operating mode indication), 26.13 (Link adaptation using the HLA Control subfield), etc.) |
| | - BQRs (see 26.5.6 (Bandwidth query report operation)) |
| | - BSRs (see 26.5.5 (Buffer status report operation)) |
| | - Frames that are sent as part of a sounding feedback exchange (see 26.7 (HE sounding protocol)) |
| | - Management frames: Action, Action No Ack frames or (Re)Association Request |
| | - Control response frames |
| | Trigger frames transmitted by the TWT scheduling AP during the broadcast TWT SP contain at least one RU for random access (see 26.8.3.2 (Rules for TWT scheduling AP) and 26.5.4 (UL OFDMA-based random access (UORA))), otherwise there are no restrictions on the frames transmitted by the TWT scheduling AP. |
| 3 | No constraints on the frames transmitted during a broadcast TWT SP except that the APtransmits a TIM frame or a FILS Discovery frame including a TIM element at the beginning of each TWT SP (see 26.14.3.2 (AP operation for opportunistic power save)). |
| 4 | The corresponding broadcast TWT SP is referred to as a restricted TWT SP. |
| | A broadcast TWT parameter set that has the Broadcast TWT Recommendation field equal to 4 is referred to as a restricted TWT parameter set. |
| 5 | The corresponding broadcast TWT SP is referred to as a restricted TWT SP. |
| | A quieting request is placed for the recipient (AP in the coordinating set) of the TWT element and the quieting request applies to the restricted TWT schedule corresponding to the Restricted TWT Parameter Set. |
| 6-7 | Reserved |

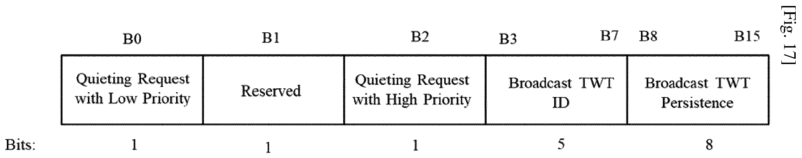

FIGURE 17 illustrates an example format of a Broadcast TWT info subfield of a Restricted TWT Parameter Set field that includes Quieting Request subfields with priority levels. According to some embodiments, when the Target AP sends a quieting request to the neighboring AP in the coordination set, it can indicate whether the quieting request is with high priority or with low priority. A high priority quieting request means that it is critical for the Target AP to protect the rTWT SP corresponding to the rTWT schedule for which the quieting request has been made.

Based on the priority level of the quieting request, the neighbor AP in the coordinating set which receives the TWT element may take different actions in response to the quieting request. According to some embodiments, the Quieting Request with Low Priority subfield set to 1 indicates that a quieting request has been made for the corresponding rTWT schedule and the request is with low priority. The Quieting Request with High Priority subfield set to 1 indicates that a quieting request has been made for the corresponding rTWT schedule and the request is with high priority. Both of the Quieting Request with Low Priority and Quieting Request with High Priority subfields cannot be set to 1 in the same Broadcast TWT Info subfield. Both of the Quieting Request with Low Priority and Quieting Request with High Priority subfields set to 0 indicates that no quieting request has been made for the corresponding rTWT schedule.

According to some other embodiments, the priority level of the quieting request can be indicated by the Broadcast TWT Recommendation field value in the Request Type field in a Broadcast TWT Parameter Set field corresponding to the restricted TWT schedule. Table 2 illustrates values of the Broadcast TWT Recommendation field according to such embodiments. Value 5 indicates low priority and value 7 indicates high priority in Table 2.

**[Table 2]**

| Broadcast TWT Recommendatio n field value | Description when transmitted in a broadcast TWT element |
|---|---|
| 0 | No constraints on the frames transmitted during a broadcast TWT SP |
| 1 | Frames transmitted during a broadcast TWT SP by a TWT scheduled STA are recommendedto be limited to solicited status and solicited feedback: |
| | - PS-Poll and QoS Null frames |
| | - Feedback can be contained in the QoS Control field or in the HE variant HT Control field of the frame, if either is present (see 26.5.2 (UL MU operation), 26.9 (Operating mode indication), 26.13 (Link adaptation using the HLA Control subfield), etc.) |
| | - Feedback in an HE TB feedback NDP, if solicited by the AP (see 26.5.7 (NDP feedback report procedure)) |
| | - BQRs (see 26.5.6 (Bandwidth query report operation)) |
| | - BSRs (see 26.5.5 (Buffer status report operation)) |
| | - Frames that are sent as part of a sounding feedback exchange (see 26.7 (HE sounding protocol)) |
| | - Management frames: Action or Action No Ack frames |
| | - Control response frames |
| | Trigger frames transmitted by the TWT scheduling AP during the broadcast TWT SP do not contain RUs for random access (see 26.8.3.2 (Rules for TWT scheduling AP) and 26.5.4 (UL OFDMA-based random access (UORA))), otherwise, there are no other restrictions on the frames transmitted by the TWT scheduling AP. |
| 2 | Frames transmitted during a broadcast TWT SP by a TWT scheduled STA are recommendedto be limited to solicited status and solicited feedback: |
| | - PS-Poll and QoS Null frames |
| | - Feedback can be contained in the QoS Control field or in the HE variant HT Control field of the frame, if either is present (see 26.5.2 (UL MU operation), 26.9 (Operating mode indication), 26.13 (Link adaptation using the HLA Control subfield), etc.) |
| | - BQRs (see 26.5.6 (Bandwidth query report operation)) |
| | - BSRs (see 26.5.5 (Buffer status report operation)) |
| | - Frames that are sent as part of a sounding feedback exchange (see 26.7 (HE sounding protocol)) |
| | - Management frames: Action, Action No Ack frames or (Re)Association Request |
| | - Control response frames |
| | Trigger frames transmitted by the TWT scheduling AP during the broadcast TWT SP contain at least one RU for random access (see 26.8.3.2 (Rules for TWT scheduling AP) and 26.5.4 (UL OFDMA-based random access (UORA))), otherwise there are no restrictions on the frames transmitted by the TWT scheduling AP. |
| 3 | No constraints on the frames transmitted during a broadcast TWT SP except that the APtransmits a TIM frame or a FILS Discovery frame including a TIM element at the beginning of each TWT SP (see 26.14.3.2 (AP operation for opportunistic power save)). |
| 4 | The corresponding broadcast TWT SP is referred to as a restricted TWT SP. |
| | A broadcast TWT parameter set that has the Broadcast TWT Recommendation field equal to 4 is referred to as a restricted TWT parameter set. |
| 5 | The corresponding broadcast TWT SP is referred to as a restricted TWT SP. |
| | A quieting request is placed for the recipient (AP in the coordinating set) of the TWT element and the quieting request applies to the restricted TWT schedule corresponding to the Restricted TWT Parameter Set. |
| | Quieting request has low priority. |
| 6 | The corresponding broadcast TWT SP is referred to as a restricted TWT SP. |
| | A quieting request is placed for the recipient (AP in the coordinating set) of the TWT element and the quieting request applies to the restricted TWT schedule corresponding to the Restricted TWT Parameter Set. |
| | Quieting request has high priority. |
| 7 | Reserved |

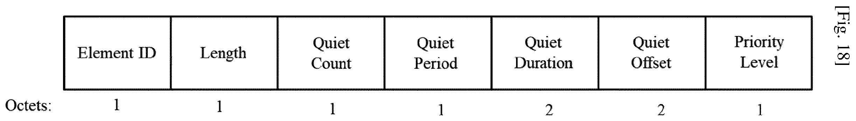

FIGURE 18 illustrates an example format of a Deprioritized variant Quiet element according to various embodiments of the present disclosure. The Priority Level field in Deprioritized variant Quiet element indicates the priority levels for the Deprioritized variant Quiet element.

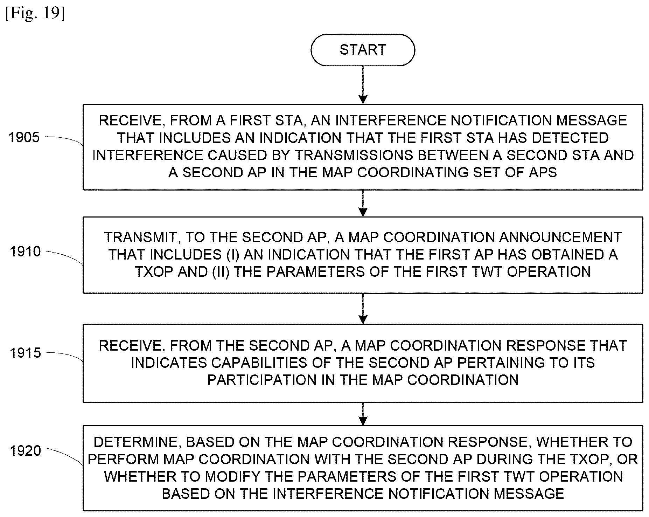

FIGURE 19 illustrates an example process for sharing TWT parameters between coordinating APs to perform MAP coordination according to various embodiments of the present disclosure. The process of FIGURE 19 is discussed as being performed by a sharing AP (a first AP) in a MAP coordinating set of APs, but it is understood that a coordinated AP (a second AP) in the MAP coordinating set could perform a corresponding process. Additionally, for convenience, the process of FIGURE 19 is discussed as being performed by a WI-FI AP, but it is understood that any suitable wireless communication device could perform the process.

Beginning at step 1905, the first AP receives, from a first STA with which the first AP exchanges traffic in a first TWT SP based on parameters of a first TWT operation between the first AP and the first STA, an interference notification message that includes an indication that the first STA has detected interference with a traffic transmission from the first AP. The interference is caused by transmissions between a second STA and a second AP in the MAP coordinating set of APs. As used herein, the term TWT operation may be either an individual TWT agreement or a broadcast TWT schedule.

The first AP next transmits, to the second AP, a MAP coordination announcement that includes (i) an indication that the first AP has obtained a TXOP and (ii) the parameters of the first TWT operation (step 1910). This may be done using a backhaul interface between the first and second APs.

The first AP then receives, from the second AP, a MAP coordination response that indicates capabilities of the second AP pertaining to its participation in the MAP coordination (step 1915).

The first AP next determines, based on the MAP coordination response, whether to perform MAP coordination with the second AP during the TXOP, or whether to modify the parameters of the first TWT operation based on the interference notification message (step 1920). The MAP coordination response may have various forms, and the first AP's determination will vary accordingly.

In one embodiment, if the MAP coordination response includes an indication that the second AP declines to participate in MAP coordination, then the first AP may determine not to perform MAP coordination with the second AP at step 1920.

In another embodiment, the MAP coordination response includes an indication that the second AP is capable of participating in MAP coordination and parameters of a second TWT operation between the second STA and the second AP. In this case, the parameters of the second TWT operation have been modified based on the parameters of the first TWT operation based on the extent of overlap between a second SP of the second TWT operation and the first SP of the first TWT operation. Information on the first SP is included in the parameters of the first TWT operation and information on the second SP is included in the parameters of the second TWT operation. Based on this MAP coordination response the first AP may determine to perform MAP coordination with the second AP, and may determine, based on the parameters of the second TWT operation, whether to modify the parameters of the first TWT operation based on the overlap between the second SP and the first SP.

In another embodiment, the MAP coordination response includes a first indication that the second AP is capable of participating in MAP coordination, parameters of a second TWT operation between the second STA and the second AP, and a second indication that the parameters of the first TWT operation need to be modified based on overlap between the first SP of the first TWT operation and a second SP of the second TWT operation. Information on the first SP is included in the parameters of the first TWT operation and information on the second SP is included in the parameters of the second TWT operation. Based on the first indication in this MAP coordination response the first AP may determine whether to perform MAP coordination with the second AP, and based on the second indication the first AP may determine whether to modify the parameters of the first TWT operation based on the parameters of the second TWT operation and based on the overlap between the first SP and the second SP.

In another embodiment, the MAP coordination response includes a TWT agreement modification rejection message that indicates that the second AP is not able to modify parameters of a second TWT operation based on overlap of a second SP of the second TWT operation with the first SP of the first TWT operation. Based on the TWT agreement modification rejection message, the first AP may determine not to perform MAP coordination with the second AP.

In another embodiment, the MAP coordination response includes a TWT agreement modification acceptance message that indicates that the second AP is able to modify the parameters of the second TWT operation based on the parameters of the first TWT operation and based on the overlap of the second SP with the first SP. Based on the TWT agreement modification acceptance message, the first AP may determine to perform MAP coordination with the second AP.

In another embodiment, the MAP coordination response includes a TWT agreement modification suggestion message that includes a suggested modification to the parameters of the first TWT operation based on the overlap of the second SP with the first SP. Based on the TWT agreement modification suggestion message, the first AP may determine whether (i) to modify the parameters of the first TWT agreement based on the suggested modification and perform MAP coordination with the second AP or (ii) not to modify the parameters of the first TWT agreement and not to perform MAP coordination with the second AP.

In cases in which the first TWT operation corresponds to a restricted TWT schedule based on which the first STA and first AP exchange latency-sensitive traffic during restricted TWT operation in a restricted TWT SP, the first AP may also transmit, to the second AP, parameters corresponding to the restricted TWT schedule and a request for the second AP to establish a quiet interval in the second AP's BSS for the second STA during restricted TWT SPs corresponding to the restricted TWT schedule. The first AP may then receive, from the second AP, a response indicating whether or not the second AP will establish the quiet interval during the restricted SPs, during which transmissions will not be allowed for the second STA.

The above flowchart illustrates example methods that can be implemented in accordance with the principles of the present disclosure and various changes could be made to the methods illustrated in the flowchart. For example, while shown as a series of steps, various steps could overlap, occur in parallel, occur in a different order, or occur multiple times. In another example, steps may be omitted or replaced by other steps.

Although the present disclosure has been described with an exemplary embodiment, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

## Claims

1. A first wireless access point, AP, device (103) for a multi-AP, MAP, coordinating set of APs, the first AP comprising:
a transceiver (209~209n),
wherein the transceiver (209a~209n) is configured to:
transmit traffic to a first station, STA, during a transmission opportunity, TXOP, in a first target wake time, TWT, service period, SP, based on parameters of a first TWT operation between the first AP and the first STA,
receive (1905), from the first STA, an interference notification message that includes an indication that the first STA has detected interference with the traffic transmission caused by transmissions between a second STA and a second AP in the MAP coordinating set of APs;
a backhaul interface (234)
wherein the backhaul interface (234) is configured to:
transmit (1910), to the second AP, a MAP coordination announcement that includes (i) an indication that the first AP has obtained the TXOP and (ii) the parameters of the first TWT operation, and
receive (1915), from the second AP, a MAP coordination response that indicates capabilities of the second AP pertaining to its participation in the MAP coordination; and
a processor (224) operably coupled to the transceiver and the backhaul interface, the processor configured to determine (1920), based on the MAP coordination response:
whether to perform MAP coordination with the second AP during the TXOP, or
whether to modify the parameters of the first TWT operation based on the interference notification message.

2. The first AP (103) of claim 1, wherein:
the MAP coordination response includes an indication that the second AP declines to participate in MAP coordination, and
the processor is further configured to determine, based on the MAP coordination response, not to perform MAP coordination with the second AP.

3. The first AP (103) of claim 1, wherein:
the MAP coordination response includes:
an indication that the second AP is capable of participating in MAP coordination; and
parameters of a second TWT operation between the second STA and the second AP,
the parameters of the second TWT operation have been modified based on the parameters of the first TWT operation based on an extent of overlap between a second SP of the second TWT operation and the first SP of the first TWT operation,
information on the first SP is included in the parameters of the first TWT operation and information on the second SP is included in the parameters of the second TWT operation, and
the processor is further configured to:
determine, based on the indication, to perform MAP coordination with the second AP; and
determine, based on the parameters of the second TWT operation, whether to modify the parameters of the first TWT operation based on the overlap between the second SP and the first SP.

4. The first AP (103) of claim 1, wherein:
the MAP coordination response includes:
a first indication that the second AP is capable of participating in MAP coordination;
parameters of a second TWT operation between the second STA and the second AP; and
a second indication that the parameters of the first TWT operation need to be modified based on overlap between the first SP of the first TWT operation and a second SP of the second TWT operation,
information on the first SP is included in the parameters of the first TWT operation and information on the second SP is included in the parameters of the second TWT operation, and
the processor is further configured to:
determine, based on the first indication, whether to perform MAP coordination with the second AP; and
determine, based on the second indication, whether to modify the parameters of the first TWT operation based on the parameters of the second TWT operation and based on the overlap between the first SP and the second SP.

5. The first AP (103) of claim 1, wherein:
the MAP coordination response includes:
a TWT agreement modification rejection message that indicates that the second AP is not able to modify parameters of a second TWT operation; or
a TWT agreement modification acceptance message that indicates that the second AP is able to modify the parameters of the second TWT operation; or
a TWT agreement modification suggestion message that includes a suggested modification to the parameters of the first TWT operation, and
the processor is further configured to:
determine, based on the MAP coordination response including the TWT agreement modification rejection message, not to perform MAP coordination with the second AP; or
determine, based on the MAP coordination response including the TWT agreement modification acceptance message, to perform MAP coordination with the second AP; or
determine, based on the MAP coordination response including the TWT agreement modification suggestion message, whether (i) to modify the parameters of the first TWT operation based on the suggested modification and perform MAP coordination with the second AP or (ii) not to modify the parameters of the first TWT operation and not to perform MAP coordination with the second AP.

6. The first AP (103) of claim 1, wherein:
the first TWT operation corresponds to a restricted TWT schedule,
the transceiver is further configured to exchange latency-sensitive traffic with the first STA during restricted TWT operation in a restricted TWT SP based on the restricted TWT schedule, and
the backhaul interface is further configured to:
transmit, to the second AP, the parameters corresponding to the restricted TWT schedule and a request for the second AP to establish a quiet interval in the second AP's basic service set (BSS) for the second STA during restricted TWT SPs corresponding to the restricted TWT schedule; and
receive, from the second AP, a response indicating whether or not the second AP will establish the quiet interval during the restricted SPs, during which transmissions will not be allowed for the second STA.

7. The first AP (103) of claim 6, wherein the response from the second AP indicates that the second AP will establish a deprioritized quiet interval in the second AP's BSS during the restricted TWT SPs, during which transmissions in the second AP's BSS will not be allowed for the second STA upon fulfillment of some conditions by the second STA.

8. A second wireless access point (AP) device (101) for a multi-AP, MAP, coordinating set of APs, the second AP comprising:
a transceiver (209a~209n) configured to transmit traffic to a second station, STA, in a second target wake time, TWT, service period, SP, based on parameters of a second TWT operation between the second AP and the second STA;
a backhaul interface (234)
wherein the backhaul interface (234) is configured to:
receive (1910), from a first AP, a MAP coordination announcement that includes (i) an indication that the first AP has obtained a TXOP and (ii) parameters of a first TWT operation between the first AP and a first STA, and
transmit (1915), to the first AP, a MAP coordination response that indicates capabilities of the second AP pertaining to its participation in the MAP coordination; and
a processor (224) operably coupled to the transceiver and the backhaul interface, the processor configured to determine, based on the MAP coordination announcement, the capabilities of the second AP pertaining to its participation in the MAP coordination.

9. The second AP (101) of claim 8, wherein:
the processor is further configured to determine, based on the MAP coordination announcement, that the second AP is not capable of performing MAP coordination with the first AP, and
the MAP coordination response includes an indication that the second AP declines to participate in MAP coordination.

10. The second AP (101) of claim 8, wherein:
the processor is further configured to modify, based on the MAP coordination announcement, the parameters of the second TWT operation based on the parameters of the first TWT operation based on an extent of overlap between a second SP of the second TWT operation and a first SP of the first TWT operation,
the MAP coordination response includes:
an indication that the second AP is capable of participating in MAP coordination; and
the modified parameters of the second TWT operation between the second STA and the second AP, and
information on the first SP is included in the parameters of the first TWT operation and information on the second SP is included in the parameters of the second TWT operation.

11. The second AP (101) of claim 8, wherein:
the processor is further configured to determine that parameters of the first TWT operation need to be modified based on overlap between a first SP of the first TWT operation and a second SP of the second TWT operation,
the MAP coordination response includes:
a first indication that the second AP is capable of participating in MAP coordination;
the parameters of the second TWT operation; and
a second indication that the parameters of the first TWT operation need to be modified based on overlap between the first SP of the first TWT operation and the second SP of the second TWT operation, and
information on the first SP is included in the parameters of the first TWT operation and information on the second SP is included in the parameters of the second TWT operation.

12. The second AP (101) of claim 8, wherein:
the processor is further configured to determine, based on the MAP coordination announcement:
whether the second AP is not able to modify the parameters of the second TWT operation based on overlap of a second SP of the second TWT operation with a first SP of the first TWT operation; and
a suggested modification to the parameters of the first TWT operation based on the overlap of the second SP with the first SP, and
the MAP coordination response includes:
a TWT agreement modification rejection message that indicates that the second AP is not able to modify the parameters of a second TWT operation; or
a TWT agreement modification acceptance message that indicates that the second AP is able to modify the parameters of the second TWT operation; or
a TWT agreement modification suggestion message that includes the suggested modification to the parameters of the first TWT operation.

13. The second AP (101) of claim 8, wherein:
the first TWT operation corresponds to a restricted TWT schedule,
the backhaul interface is further configured to:
receive, from the first AP, the parameters corresponding to the restricted TWT schedule and a request for the second AP to establish a quiet interval in the second AP's basic service set (BSS) for the second STA in restricted TWT SPs corresponding to the restricted TWT schedule; and
transmit, to the first AP, a response indicating whether or not the second AP will establish the quiet interval during the restricted SPs, during which transmissions will not be allowed for the second STA.

14. The second AP (101) of claim 13, wherein the response from the second AP indicates that the second AP will establish a deprioritized quiet interval in the second AP's BSS during the restricted TWT SPs, during which transmissions in the second AP's BSS will not be allowed for the second STA upon fulfillment of some conditions by the second STA.

15. A method performed by a first wireless access point, AP, device (103) for a multi-AP, MAP, coordinating set of APs, the method comprising:
receiving, from a first station, STA, with which the first AP exchanges traffic in a first target wake time, TWT, service period, SP, based on parameters of a first TWT operation between the first AP and the first STA, an interference notification message that includes an indication that the first STA has detected interference with a traffic transmission from the first AP, the interference caused by transmissions between a second STA and a second AP in the MAP coordinating set of APs;
transmitting, to the second AP, a MAP coordination announcement that includes (i) an indication that the first AP has obtained a transmission opportunity, TXOP, and (ii) the parameters of the first TWT operation;
receiving, from the second AP, a MAP coordination response that indicates capabilities of the second AP pertaining to its participation in the MAP coordination; and
determining, based on the MAP coordination response:
whether to perform MAP coordination with the second AP during the TXOP, or
whether to modify the parameters of the first TWT operation based on the interference notification message.

## Patentansprüche

1. Erste drahtlose Zugangspunkt-, AP-Vorrichtung (103) für einen Multi-AP-, MAP-Koordinierungssatz von APs, wobei der erste AP Folgendes umfasst:
einen Sendeempfänger (209a~209n),
wobei der Sendeempfänger (209a~209n) zu Folgendem konfiguriert ist:
Übertragen von Verkehr an eine erste Station, STA, während einer Übertragungsgelegenheit, TXOP, in einer ersten Zielwachzeit-, TWT-Dienstperiode, SP, basierend auf Parametern eines ersten TWT-Betriebs zwischen dem ersten AP und der ersten STA,
Empfangen (1905), von der ersten STA, einer Interferenzbenachrichtigungsnachricht, die eine Angabe beinhaltet, dass die erste STA Interferenz mit der Verkehrsübertragung bewirkt durch Übertragungen zwischen einer zweiten STA und einem zweiten AP in dem MAP-Koordinierungssatz von APs detektiert hat;
eine Backhaul-Schnittstelle (234), wobei die Backhaul-Schnittstelle (234) zu Folgendem konfiguriert ist:
Übertragen (1910), an den zweiten AP, einer MAP-Koordinationsansage, die (i) eine Angabe, dass der erste AP die TXOP erhalten hat, und (ii) die Parameter des ersten TWT-Betriebs beinhaltet, und
Empfangen (1915), von dem zweiten AP, einer MAP-Koordinationsantwort, die Fähigkeiten des zweiten AP in Bezug auf seine Teilnahme an der MAP-Koordination angibt; und
einen Prozessor (224), der an den Sendeempfänger und die Backhaul-Schnittstelle wirkgekoppelt ist, wobei der Prozessor konfiguriert ist, um basierend auf der MAP-Koordinationsantwort Folgendes zu bestimmen (1920):
ob MAP-Koordination mit dem zweiten AP während der TXOP durchzuführen ist, oder
ob die Parameter des ersten TWT-Betriebs basierend auf der Interferenzbenachrichtigungsnachricht zu modifizieren sind.

2. Erster AP (103) nach Anspruch 1, wobei:
die MAP-Koordinationsantwort eine Angabe beinhaltet, dass der zweite AP ablehnt, an MAP-Koordination teilzunehmen, und
der Prozessor ferner konfiguriert ist, um basierend auf der MAP-Koordinationsantwort zu bestimmen, keine MAP-Koordination mit dem zweiten AP durchzuführen.

3. Erster AP (103) nach Anspruch 1, wobei:
die MAP-Koordinationsantwort Folgendes beinhaltet:
eine Angabe, dass der zweite AP in der Lage ist, an MAP-Koordination teilzunehmen; und
Parameter eines zweiten TWT-Betriebs zwischen der zweiten STA und dem zweiten AP,
wobei die Parameter des zweiten TWT-Betriebs basierend auf den Parametern des ersten TWT-Betriebs basierend auf einem Ausmaß von Überlappung zwischen einer zweiten SP des zweiten TWT-Betriebs und der ersten SP des ersten TWT-Betriebs modifiziert worden sind,
Informationen über die erste SP in den Parametern des ersten TWT-Betriebs enthalten sind und Informationen über die zweite SP in den Parametern des zweiten TWT-Betriebs enthalten sind, und
der Prozessor ferner zu Folgendem konfiguriert ist:
Bestimmen, basierend auf der Angabe, MAP-Koordination mit dem zweiten AP durchzuführen; und
Bestimmen, basierend auf den Parametern des zweiten TWT-Betriebs, ob die Parameter des ersten TWT-Betriebs basierend auf der Überlappung zwischen der zweiten SP und der ersten SP zu modifizieren sind.

4. Erster AP (103) nach Anspruch 1, wobei:
die MAP-Koordinationsantwort Folgendes beinhaltet:
eine erste Angabe, dass der zweite AP in der Lage ist, an MAP-Koordination teilzunehmen;
Parameter eines zweiten TWT-Betriebs zwischen der zweiten STA und dem zweiten AP; und
eine zweite Angabe, dass die Parameter des ersten TWT-Betriebs basierend auf Überlappung zwischen der ersten SP des ersten TWT-Betriebs und einer zweiten SP des zweiten TWT-Betriebs modifiziert werden müssen,
Informationen über die erste SP in den Parametern des ersten TWT-Betriebs enthalten sind und Informationen über die zweite SP in den Parametern des zweiten TWT-Betriebs enthalten sind, und
der Prozessor ferner zu Folgendem konfiguriert ist:
Bestimmen, basierend auf der ersten Angabe, ob MAP-Koordination mit dem zweiten AP durchzuführen ist; und
Bestimmen, basierend auf der zweiten Angabe, ob die Parameter des ersten TWT-Betriebs basierend auf den Parametern des zweiten TWT-Betriebs und basierend auf der Überlappung zwischen der ersten SP und der zweiten SP zu modifizieren sind.

5. Erster AP (103) nach Anspruch 1, wobei:
die MAP-Koordinationsantwort Folgendes beinhaltet:
eine TWT-Vereinbarungsmodifikationsablehnungsnachricht, die angibt, dass der zweite AP nicht in der Lage ist, Parameter eines zweiten TWT-Betriebs zu modifizieren; oder
eine TWT-Vereinbarungsmodifikationsannahmenachricht, die angibt, dass der zweite AP in der Lage ist, die Parameter des zweiten TWT-Betriebs zu modifizieren; oder
eine TWT-Vereinbarungsmodifikationsvorschlagsnachricht, die eine vorgeschlagene Modifikation an den Parametern des ersten TWT-Betriebs beinhaltet, und
der Prozessor ferner zu Folgendem konfiguriert ist:
Bestimmen, basierend auf der MAP-Koordinationsantwort, beinhaltend die TWT-Vereinbarungmodifikationsablehnungsnachricht, keine MAP-Koordination mit dem zweiten AP durchzuführen; oder
Bestimmen, basierend auf der MAP-Koordinationsantwort, beinhaltend die TWT-Vereinbarungsmodifikationsannahmenachricht, MAP-Koordination mit dem zweiten AP durchzuführen; oder
Bestimmen, basierend auf der MAP-Koordinationsantwort, beinhaltend die TWT-Vereinbarungsmodifikationsvorschlagsnachricht, ob (i) die Parameter des ersten TWT-Betriebs basierend auf der vorgeschlagenen Modifikation zu modifizieren und MAP-Koordination mit dem zweiten AP durchzuführen sind, oder (ii) die Parameter des ersten TWT-Betriebs nicht zu modifizieren und keine MAP-Koordination mit dem zweiten AP durchzuführen sind.

6. Erster AP (103) nach Anspruch 1, wobei:
der erste TWT-Betrieb einem eingeschränkten TWT-Zeitplan entspricht,
der Sendeempfänger ferner konfiguriert ist, um latenzempfindlichen Verkehr mit der ersten STA während eingeschränktem TWT-Betrieb in einer eingeschränkten TWT-SP basierend auf dem eingeschränkten TWT-Zeitplan auszutauschen, und
die Backhaul-Schnittstelle ferner zu Folgendem konfiguriert ist:
Übertragen, an den zweiten AP, der Parameter, die dem eingeschränkten TWT-Zeitplan entsprechen, und einer Anforderung an den zweiten AP, ein Ruheintervall in dem Basisdienstsatz (BSS) des zweiten AP für die zweite STA während eingeschränkter TWT-SPs, die dem eingeschränkten TWT-Zeitplan entsprechen, einzurichten; und
Empfangen, von dem zweiten AP, einer Antwort, die angibt, ob der zweite AP das Ruheintervall während der eingeschränkten SPs einrichten wird oder nicht, während dessen Übertragungen für die zweite STA nicht erlaubt werden.

7. Erster AP (103) nach Anspruch 6, wobei die Antwort von dem zweiten AP angibt, dass der zweite AP ein depriorisiertes Ruheintervall in dem BSS des zweiten AP während der eingeschränkten TWT-SPs einrichten wird, während dessen Übertragungen in dem BSS des zweiten AP für die zweite STA bei Erfüllung von einigen Bedingungen durch die zweite STA nicht erlaubt werden.

8. Zweite drahtlose Zugangspunkt(AP-)Vorrichtung (101) für einen Multi-AP-, MAP-Koordinierungssatz von APs, wobei der zweite AP Folgendes umfasst:
einen Sendeempfänger (209a~209n), der konfiguriert ist, um Verkehr an eine zweite Station, STA, in einer zweiten Zielwachzeit-, TWT-Dienstperiode, SP, basierend auf Parametern eines zweiten TWT-Betriebs zwischen dem zweiten AP und der zweiten STA zu übertragen;
eine Backhaul-Schnittstelle (234),
wobei die Backhaul-Schnittstelle (234) zu Folgendem konfiguriert ist:
Empfangen (1910), von einem ersten AP, einer MAP-Koordinationsansage, die (i) eine Angabe, dass der erste AP eine TXOP erhalten hat, und (ii) Parameter eines ersten TWT-Betriebs zwischen dem ersten AP und einer ersten STA beinhaltet, und
Übertragen (1915), an den ersten AP, einer MAP-Koordinationsantwort, die Fähigkeiten des zweiten AP in Bezug auf seine Teilnahme an der MAP-Koordination angibt; und
einen Prozessor (224), der an den Sendeempfänger und die Backhaul-Schnittstelle wirkgekoppelt ist, wobei der Prozessor konfiguriert ist, um basierend auf der MAP-Koordinationsansage die Fähigkeiten des zweiten AP in Bezug auf seine Teilnahme an der MAP-Koordination zu bestimmen.

9. Zweiter AP (101) nach Anspruch 8, wobei:
der Prozessor ferner konfiguriert ist, um basierend auf der MAP-Koordinationsansage zu bestimmen, dass der zweite AP nicht in der Lage ist, MAP-Koordination mit dem ersten AP durchzuführen, und
die MAP-Koordinationsantwort eine Angabe beinhaltet, dass der zweite AP ablehnt, an MAP-Koordination teilzunehmen.

10. Zweiter AP (101) nach Anspruch 8, wobei:
wobei der Prozessor ferner konfiguriert ist, um basierend auf der MAP-Koordinationsansage die Parameter des zweiten TWT-Betriebs basierend auf den Parametern des ersten TWT-Betriebs basierend auf einem Ausmaß von Überlappung zwischen einer zweiten SP des zweiten TWT-Betriebs und einer ersten SP des ersten TWT-Betriebs zu modifizieren,
die MAP-Koordinationsantwort Folgendes beinhaltet:
eine Angabe, dass der zweite AP in der Lage ist, an MAP-Koordination teilzunehmen; und
die modifizierten Parameter des zweiten TWT-Betriebs zwischen der zweiten STA und dem zweiten AP, und
Informationen über die erste SP in den Parametern des ersten TWT-Betriebs enthalten sind und Informationen über die zweite SP in den Parametern des zweiten TWT-Betriebs enthalten sind.

11. Zweiter AP (101) nach Anspruch 8, wobei:
der Prozessor ferner konfiguriert ist, um basierend auf Überlappung zwischen einer ersten SP des ersten TWT-Betriebs und einer zweiten SP des zweiten TWT-Betriebs zu bestimmen, dass Parameter des ersten TWT-Betriebs modifiziert werden müssen,
die MAP-Koordinationsantwort Folgendes beinhaltet:
eine erste Angabe, dass der zweite AP in der Lage ist, an MAP-Koordination teilzunehmen;
die Parameter des zweiten TWT-Betriebs; und
eine zweite Angabe, dass die Parameter des ersten TWT-Betriebs basierend auf Überlappung zwischen der ersten SP des ersten TWT-Betriebs und der zweiten SP des zweiten TWT-Betriebs modifiziert werden müssen, und
Informationen über die erste SP in den Parametern des ersten TWT-Betriebs enthalten sind und Informationen über die zweite SP in den Parametern des zweiten TWT-Betriebs enthalten sind.

12. Zweiter AP (101) nach Anspruch 8, wobei:
der Prozessor ferner konfiguriert ist, um basierend auf der MAP-Koordinationsansage Folgendes zu bestimmen:
ob der zweite AP nicht in der Lage ist, die Parameter des zweiten TWT-Betriebs basierend auf Überlappung einer zweiten SP des zweiten TWT-Betriebs mit einer ersten SP des ersten TWT-Betriebs zu modifizieren; und
eine vorgeschlagene Modifikation an den Parametern des ersten TWT-Betriebs basierend auf der Überlappung der zweiten SP mit der ersten SP, und
die MAP-Koordinationsantwort Folgendes beinhaltet:
eine TWT-Vereinbarungsmodifikationsablehnungsnachricht, die angibt, dass der zweite AP nicht in der Lage ist, die Parameter eines zweiten TWT-Betriebs zu modifizieren; oder
eine TWT-Vereinbarungsmodifikationsannahmenachricht, die angibt, dass der zweite AP in der Lage ist, die Parameter des zweiten TWT-Betriebs zu modifizieren; oder
eine TWT-Vereinbarungsmodifikationsvorschlagsnachricht, welche die vorgeschlagene Modifikation an den Parametern des ersten TWT-Betriebs beinhaltet.

13. Zweiter AP (101) nach Anspruch 8, wobei:
der erste TWT-Betrieb einem eingeschränkten TWT-Zeitplan entspricht,
die Backhaul-Schnittstelle ferner zu Folgendem konfiguriert ist:
Empfangen, von dem ersten AP, der Parameter, die dem eingeschränkten TWT-Zeitplan entsprechen, und einer Anforderung an den zweiten AP, ein Ruheintervall in dem Basisdienstsatz (BSS) des zweiten AP für die zweite STA in eingeschränkten TWT-SPs, die dem eingeschränkten TWT-Zeitplan entsprechen, einzurichten; und
Übertragen, an den ersten AP, einer Antwort, die angibt, ob der zweite AP das Ruheintervall während der eingeschränkten SPs einrichten wird oder nicht, während dessen Übertragungen für die zweite STA nicht erlaubt werden.

14. Zweiter AP (101) nach Anspruch 13, wobei die Antwort von dem zweiten AP angibt, dass der zweite AP ein depriorisiertes Ruheintervall in dem BSS des zweiten AP während der eingeschränkten TWT-SPs einrichten wird, während dessen Übertragungen in dem BSS des zweiten AP für die zweite STA bei Erfüllung von einigen Bedingungen durch die zweite STA nicht erlaubt sein werden.

15. Verfahren, durchgeführt durch eine erste drahtlose Zugangspunkt-, AP-Vorrichtung (103) für einen Multi-AP-, MAP-Koordinierungssatz von APs, wobei das Verfahren Folgendes umfasst:
Empfangen, von einer ersten Station, STA, mit welcher der erste AP Verkehr in einer ersten Zielwachzeit-, TWT-Dienstperiode, SP, austauscht, basierend auf Parametern eines ersten TWT-Betriebs zwischen dem ersten AP und der ersten STA, einer Interferenzbenachrichtigungsnachricht, die eine Angabe beinhaltet, dass die erste STA Interferenz mit einer Verkehrsübertragung von dem ersten AP detektiert hat, wobei die Interferenz durch Übertragungen zwischen einer zweiten STA und einem zweiten AP in dem MAP-Koordinierungssatz von APs bewirkt wird;
Übertragen, an den zweiten AP, einer MAP-Koordinationsansage, die (i) eine Angabe, dass der erste AP eine Übertragungsgelegenheit, TXOP, erhalten hat, und (ii) die Parameter des ersten TWT-Betriebs beinhaltet;
Empfangen, von dem zweiten AP, einer MAP-Koordinationsantwort, die Fähigkeiten des zweiten AP in Bezug auf seine Teilnahme an der MAP-Koordination angibt; und
Bestimmen, basierend auf der MAP-Koordinationsantwort:
ob MAP-Koordination mit dem zweiten AP während der TXOP durchzuführen ist, oder
ob die Parameter des ersten TWT-Betriebs basierend auf der Interferenzbenachrichtigungsnachricht zu modifizieren sind.

## Revendications

1. Premier dispositif de point d'accès, AP, sans fil (103) pour un ensemble multi-AP, MAP, d'AP en coordination, le premier AP comprenant :
un émetteur-récepteur (209a~209n),
dans lequel l'émetteur-récepteur (209a~209n) est configuré pour :
transmettre du trafic à une première station, STA, pendant une opportunité de transmission, TXOP, dans une première période de service, SP, de temps de réveil cible, TWT, sur la base de paramètres d'une première opération de TWT entre le premier AP et la première STA,
la réception (1905), en provenance de la première STA, d'un message de notification d'interférence qui comprend une indication que la première STA a détecté une interférence avec la transmission de trafic entraînée par des transmissions entre une seconde STA et un second AP dans l'ensemble MAP d'AP en coordination ;
une interface de liaison terrestre (234) dans lequel l'interface de liaison terrestre (234) est configurée pour :
transmettre (1910), au second AP, une annonce de coordination MAP qui comprend (i) une indication que le premier AP a obtenu la TXOP et (ii) les paramètres de la première opération de TWT, et
recevoir (1915), en provenance du second AP, une réponse de coordination MAP qui indique des capacités du second AP relatives à sa participation à la coordination MAP ; et
un processeur (224) couplé de manière opérationnelle à l'émetteur-récepteur et à l'interface de liaison terrestre, le processeur étant configuré pour déterminer (1920), sur la base de la réponse de coordination MAP :
s'il faut effectuer une coordination MAP avec le second AP pendant la TXOP, ou
s'il faut modifier les paramètres de la première opération de TWT sur la base du message de notification d'interférence.

2. Premier AP (103) de la revendication 1, dans lequel :
la réponse de coordination MAP comprend une indication que le second AP refuse de participer à la coordination MAP, et
le processeur est en outre configuré pour déterminer, sur la base de la réponse de coordination MAP, de ne pas réaliser de coordination MAP avec le second AP.

3. Premier AP (103) de la revendication 1, dans lequel :
la réponse de coordination MAP comprend :
une indication que le second AP est capable de participer à la coordination MAP ; et
des paramètres d'une seconde opération de TWT entre la seconde STA et le second AP,
les paramètres de la seconde opération de TWT ont été modifiés sur la base des paramètres de la première opération de TWT sur la base d'une étendue de chevauchement entre une seconde SP de la seconde opération de TWT et la première SP de la première opération de TWT,
des informations sur la première SP sont comprises dans les paramètres de la première opération de TWT et des informations sur la seconde SP sont comprises dans les paramètres de la seconde opération de TWT, et
le processeur est en outre configuré pour :
déterminer, sur la base de l'indication, de réaliser une coordination MAP avec le second AP ; et
déterminer, sur la base des paramètres de la seconde opération de TWT, s'il faut modifier les paramètres de la première opération de TWT sur la base du chevauchement entre la seconde SP et la première SP.

4. Premier AP (103) de la revendication 1, dans lequel :
la réponse de coordination MAP comprend :
une première indication que le second AP est capable de participer à la coordination MAP ;
des paramètres d'une seconde opération de TWT entre la seconde STA et le second AP ; et
une seconde indication que les paramètres de la première opération de TWT doivent être modifiés sur la base d'un chevauchement entre la première SP de la première opération de TWT et une seconde SP de la seconde opération de TWT,
des informations sur la première SP sont comprises dans les paramètres de la première opération de TWT et des informations sur la seconde SP sont comprises dans les paramètres de la seconde opération de TWT, et
le processeur est en outre configuré pour :
déterminer, sur la base de la première indication, s'il faut réaliser une coordination MAP avec le second AP ; et
déterminer, sur la base de la seconde indication, s'il faut modifier les paramètres de la première opération de TWT sur la base des paramètres de la seconde opération de TWT et sur la base du chevauchement entre la première SP et la seconde SP.

5. Premier AP (103) de la revendication 1, dans lequel :
la réponse de coordination MAP comprend :
un message de rejet de modification d'accord de TWT qui indique que le second AP n'est pas en mesure de modifier des paramètres d'une seconde opération de TWT ; ou
un message d'acceptation de modification d'accord de TWT qui indique que le second AP est en mesure de modifier les paramètres de la seconde opération de TWT ; ou
un message de suggestion de modification d'accord de TWT qui comprend une proposition de modification des paramètres de la première opération de TWT, et
le processeur est en outre configuré pour :
déterminer, sur la base de la réponse de coordination MAP comprenant le message de rejet de modification d'accord de TWT, de ne pas réaliser de coordination MAP avec le second AP ; ou
déterminer, sur la base de la réponse de coordination MAP comprenant le message d'acceptation de modification d'accord de TWT, de réaliser une coordination MAP avec le second AP ; ou
déterminer, sur la base de la réponse de coordination MAP comprenant le message de suggestion de modification d'accord de TWT, si (i) il faut modifier les paramètres de la première opération de TWT sur la base de la modification suggérée et réaliser une coordination MAP avec le second AP ou (ii) il ne faut pas modifier les paramètres de la première opération de TWT et ne pas réaliser de coordination MAP avec le second AP.

6. Premier AP (103) de la revendication 1, dans lequel :
la première opération de TWT correspond à un programme de TWT restreint,
l'émetteur-récepteur est en outre configuré pour échanger du trafic sensible à la latence avec la première STA pendant une opération de TWT restreinte dans une SP de TWT restreinte sur la base du programme de TWT restreint, et
l'interface de liaison terrestre est en outre configurée pour :
transmettre, au second AP, les paramètres correspondant au programme de TWT restreint et une demande au second AP d'établir un intervalle silencieux dans l'ensemble de services de base (BSS) du second AP pour la seconde STA pendant des SP de TWT restreintes correspondant au programme de TWT restreint ; et
recevoir, en provenance du second AP, une réponse indiquant si le second AP établira ou non l'intervalle silencieux pendant les SP restreintes, au cours duquel des transmissions ne seront pas autorisées pour la seconde STA.

7. Premier AP (103) de la revendication 6, dans lequel la réponse du second AP indique que le second AP établira un intervalle silencieux défavorisé dans le second BSS d'AP pendant les SP de TWT restreintes, au cours duquel des transmissions dans le second BSS d'AP ne seront pas autorisées pour la seconde STA lors de la réalisation de certaines conditions par la seconde STA.

8. Second dispositif de point d'accès (AP) sans fil (101) pour un ensemble multi-AP, MAP, d'AP en coordination, le second AP comprenant :
un émetteur-récepteur (209a~209n) configuré pour transmettre du trafic à une seconde station, STA, dans une seconde période de service, SP, de temps de réveil cible, TWT, sur la base de paramètres d'une seconde opération de TWT entre le second AP et la seconde STA ;
une interface de liaison terrestre (234) dans lequel l'interface de liaison terrestre (234) est configurée pour :
recevoir (1910), en provenance d'un premier AP, une annonce de coordination MAP qui comprend (i) une indication que le premier AP a obtenu une TXOP et (ii) des paramètres d'une première opération de TWT entre le premier AP et une première STA, et
transmettre (1915), au premier AP, une réponse de coordination MAP qui indique des capacités du second AP relatives à sa participation à la coordination MAP ; et
un processeur (224) couplé de manière opérationnelle à l'émetteur-récepteur et à l'interface de liaison terrestre, le processeur étant configuré pour déterminer, sur la base de l'annonce de coordination MAP, les capacités du second AP relatives à sa participation à la coordination MAP.

9. Second AP (101) de la revendication 8, dans lequel :
le processeur est en outre configuré pour déterminer, sur la base de l'annonce de coordination MAP, que le second AP n'est pas capable d'effectuer une coordination MAP avec le premier AP, et
la réponse de coordination MAP comprend une indication que le second AP refuse de participer à la coordination MAP.

10. Second AP (101) de la revendication 8, dans lequel :
le processeur est en outre configuré pour modifier, sur la base de l'annonce de coordination MAP, les paramètres de la seconde opération de TWT sur la base des paramètres de la première opération de TWT sur la base d'une étendue de chevauchement entre une seconde SP de la seconde opération de TWT et une première SP de la première opération de TWT,
la réponse de coordination MAP comprend :
une indication que le second AP est capable de participer à la coordination MAP ; et
les paramètres modifiés de la seconde opération de TWT entre la seconde STA et le second AP, et
des informations sur la première SP sont comprises dans les paramètres de la première opération de TWT et des informations sur la seconde SP sont comprises dans les paramètres de la seconde opération de TWT.

11. Second AP (101) de la revendication 8, dans lequel :
le processeur est en outre configuré pour déterminer que des paramètres de la première opération de TWT doivent être modifiés sur la base d'un chevauchement entre une première SP de la première opération de TWT et une seconde SP de la seconde opération de TWT,
la réponse de coordination MAP comprend :
une première indication que le second AP est capable de participer à la coordination MAP ;
les paramètres de la seconde opération de TWT ; et
une seconde indication que les paramètres de la première opération de TWT doivent être modifiés sur la base d'un chevauchement entre la première SP de la première opération de TWT et la seconde SP de la seconde opération de TWT, et
des informations sur la première SP sont comprises dans les paramètres de la première opération de TWT et des informations sur la seconde SP sont comprises dans les paramètres de la seconde opération de TWT.

12. Second AP (101) de la revendication 8, dans lequel :
le processeur est en outre configuré pour déterminer, sur la base de l'annonce de coordination MAP :
si le second AP n'est pas en mesure de modifier les paramètres de la seconde opération de TWT sur la base du chevauchement d'une seconde SP de la seconde opération de TWT avec une première SP de la première opération de TWT ; et
une suggestion de modification des paramètres de la première opération de TWT sur la base du chevauchement de la seconde SP avec la première SP, et
la réponse de coordination MAP comprend :
un message de rejet de modification d'accord de TWT qui indique que le second AP n'est pas en mesure de modifier les paramètres d'une seconde opération de TWT ; ou
un message d'acceptation de modification d'accord de TWT qui indique que le second AP est en mesure de modifier les paramètres de la seconde opération de TWT ; ou
un message de suggestion de modification d'accord TWT qui comprend la modification suggérée des paramètres de la première opération de TWT.

13. Second AP (101) de la revendication 8, dans lequel :
la première opération de TWT correspond à un programme de TWT restreint,
l'interface de liaison terrestre est en outre configurée pour :
recevoir, en provenance du premier AP, les paramètres correspondant au programme de TWT restreint et une demande au second AP d'établir un intervalle silencieux dans l'ensemble de services de base (BSS) du second AP pour la seconde STA dans des SP de TWT restreintes correspondant au programme de TWT restreint ; et
transmettre, au premier AP, une réponse indiquant si le second AP établira ou non l'intervalle silencieux pendant les SP restreintes, au cours duquel des transmissions ne seront pas autorisées pour la seconde STA.

14. Second AP (101) de la revendication 13, dans lequel la réponse du second AP indique que le second AP établira un intervalle silencieux défavorisé dans le second BSS d'AP pendant les SP de TWT restreintes, au cours duquel des transmissions dans le second BSS d'AP ne seront pas autorisées pour la seconde STA lors de la réalisation de certaines conditions par la seconde STA.

15. Procédé réalisé par un premier dispositif de point d'accès, AP, sans fil (103) pour un ensemble multi-AP, MAP, d'AP en coordination, le procédé comprenant :
la réception, en provenance d'une première station, STA, avec laquelle le premier AP échange du trafic dans une première période de service, SP, de temps de réveil cible, TWT, sur la base de paramètres d'une première opération de TWT entre le premier AP et la première STA, d'un message de notification d'interférence qui comprend une indication que le premier STA a détecté une interférence avec une transmission de trafic en provenance du premier AP, l'interférence étant entraînée par des transmissions entre une seconde STA et un second AP dans l'ensemble MAP d'AP en coordination ;
la transmission, au second AP, d'une annonce de coordination MAP qui comprend (i) une indication que le premier AP a obtenu une opportunité de transmission, TXOP, et (ii) les paramètres de la première opération de TWT ;
la réception, en provenance du second AP, d'une réponse de coordination MAP qui indique des capacités du second AP relatives à sa participation à la coordination MAP ; et
le fait de déterminer, sur la base de la réponse de coordination MAP :
s'il faut effectuer une coordination MAP avec le second AP pendant la TXOP, ou
s'il faut modifier les paramètres de la première opération de TWT sur la base du message de notification d'interférence.
